(19) Europäisches Patentamt
European Patent Office
Office européen des brevets

(11) EP 3 843 013 A1

(12) EUROPEAN PATENT APPLICATION

(43) Date of publication:
30.06.2021 Bulletin 2021/26

(51) Int Cl.:
G06N 3/063 (2006.01)

(21) Application number: 20213028.2

(22) Date of filing: 10.12.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 10.12.2019 US 201962946169 P
01.12.2020 US 202017108643

(71) Applicant: The MathWorks, Inc.
Natick, MA 01760-2098 (US)

(72) Inventors:
• Venkatesan, Vaidehi
Lexington, MA 02420 (US)
• Shankar, Jayaprabha
Natick, MA 01760 (US)
• Zhuang, Shixin
Sudbury, MA 01776 (US)
• Venkataramani, Girish
Oakland, CA 94618 (US)
• Hanumantharayappa, FNU
Natick, MA 01760 (US)

(74) Representative: Müller-Boré & Partner
Patentanwälte PartG mbB
Friedenheimer Brücke 21
80639 München (DE)

(54) **SYSTEMS AND METHODS FOR QUANTIZING A NEURAL NETWORK**

(57) Systems and methods quantize an application having a trained Deep Neural Network (DNN) for deployment on target hardware. The application may be instrumented to observe data values generated during execution of the application. Statistics may be generated for the observed data values and presented in a visualization tool. The application may be quantized through a rules based approach. The quantization may be based on the statistics and on constraints imposed by resources available at the target hardware. The systems and methods may present the proposed data types resulting from the quantization and may create a quantized version of the application incorporating the proposed data types. The systems and methods may generate performance data to validate the quantized version of the application. Changes to the rules may be made and the quantization process repeated if the performance is not satisfactory.

FIG. 1

**Description**

**CROSS-REFERENCE TO RELATED APPLICATIONS**

This application claims the benefit of U.S. Provisional Patent Application Serial No. 62/946,169 filed December 10, 2019 for Systems and Methods for Quantizing an Application Having a Deep Neural Network, which application is hereby incorporated by reference in its entirety.

**BRIEF DESCRIPTION OF THE DRAWINGS**

The patent or application file contains at least one drawing executed in color. Copies of this patent or patent application publication with color drawing(s) will be provided by the Office upon request and payment of the necessary fee.
The description below refers to the accompanying drawings, of which:

Fig. 1 is a schematic illustration of an example workflow in accordance with one or more embodiments;
Fig. 2 is a schematic illustration of an example program development environment in accordance with one or more embodiments;
Fig. 3 is a functional diagram of an example quantization system in accordance with one or more embodiments;
Figs. 4A-E are partial views of a flow diagram of an example method in accordance with one or more embodiments;
Fig. 5 is a schematic illustration of an example User Interface for selecting an application to be quantized in accordance with one or more embodiments;
Fig. 6 is a schematic illustration of an example User Interface presenting information on a selected application in accordance with one or more embodiments;
Fig. 7 is a schematic illustration of an example User Interface for selecting instrumentation data and validation data for a selected application in accordance with one or more embodiments;
Fig. 8 is a schematic illustration of an example User Interface for specifying an execution environment on which a quantized version of the selected application is to be run in accordance with one or more embodiments;
Fig. 9 is a schematic illustration of an example User Interface through which one or more quantization options may be specified in accordance with one or more embodiments;
Figs. 10A and 10B are partial views of a schematic illustration of an example User Interface for presenting information, including statistical information, derived for the selected application in accordance with one or more embodiments;
Figs. 11A and 11B are partial views of a schematic illustration of an example User Interface for presenting quantization proposals determined for the selected application in accordance with one or more embodiments;
Fig. 12 is a schematic illustration of an example User Interface for presenting performance data derived for the selected application and a quantized version of the selected application in accordance with one or more embodiments;
Fig. 13 is a schematic illustration of a computer or data processing system for implementing one or more embodiments of the present disclosure;
Fig. 14 is a schematic diagram of an example distributed computing environment in which systems and/or methods described herein may be implemented;
Fig. 15A is a representation of a histogram view in accordance with one or more embodiments;
Fig. 15B is a representation of another histogram view in accordance with one or more embodiments;
Fig. 16 is a schematic illustration of an example for choosing a dynamic fixed-point data type in accordance with one or more embodiments;
Figs. 17A and 17B are partial views of a schematic illustration of an example User Interface (UI) for presenting statistics and performance data derived for an application in accordance with one or more embodiments;
Figs. 18A and 18B are partial views of a schematic illustration of an example User Interface (UI) for presenting quantization errors determined for a plurality of instrumentation points in accordance with one or more embodiments;
Figs. 19A and 19B are partial views of a schematic illustration of an example User Interface (UI) through which one or more quantization options may be changed in accordance with one or more embodiments;
Figs. 20A-20D are partial views of a schematic illustration of an example User Interface (UI) for presenting information, including statistical information and/or attribute information derived for an application based on the instrumentation data in accordance with one or more embodiments;
Fig. 21 is a schematic illustration of an example User Interface (UI) for presenting validation results for a quantized application based in accordance with one or more embodiments;
Fig. 22 is an illustration of an example process for assigning data values observed at an instrumentation point to power of two bins and generating a user interface in accordance with one or more embodiments; and
Fig. 23 is an illustration of an example process for quantizing an instrumentation point in accordance with one or more embodiments.

**DETAILED DESCRIPTION OF ILLUSTRATIVE EMBODIMENTS**

Deep learning refers to a class of machine learning algorithms used to perform complex tasks, such as recommendation engines, object detection, image classification, speech recognition, de-noising signals, segmentation, translation, image/video/text generation, etc. Deep learning is typically performed using a computer program that implements a Deep Neural Network (DNN). A neural network refers to a computer program or algorithm that includes processing nodes arranged in layers. The first layer, also called the input layer, receives the input data to be processed, e.g., classified to two or more categories. The last layer, also called the output layer, provides the processed output, e.g., the classification, calculated by the network for the input data. The layers in between the input and output layers are called the hidden layers. Exemplary layers of a DNN include convolutional layers, activation layers, max-pooling or average-pooling layers, normalization layers, and fully-connected layers, among others. A network is referred to as a Deep Neural Network (DNN) when it has more than one, and often many, hidden layers.

Exemplary Deep Neural Networks (DNNs) include Convolutional Neural Networks (CNNs or ConvNets), Region-based CNNs (R-CNNs), Residual Neural Networks (ResNets), Fully Convolutional Networks (FCNs), Deconvolutional Neural Networks (DeconvNets), Directed Acyclic Graph (DAG) networks, and Recurrent Neural Networks (RNNs), such as Long Short-Term Memory (LSTM), and Generative Adversarial Networks (GANs), among others. The architecture of a particular DNN, for example the number and type of layers and their order in the DNN, can vary depending on the application and/or input data being classified. The layers of a series network, for example, may be sequentially arranged whereas a DAG network may include branches and merges among its layers.

At least some of the layers of a DNN may include input, output, and/or internal data arranged in multiple dimensions. For example, in a four-dimensional (4D) DNN, the dimensions may be batch sizes (N), width (W), height (H), and channels (C) or depth. A layer may receive input data and apply one or more functions or operations to the input data to produce output data for processing by the next layer of the DNN. In the example of image data, width may be the width of the image or a portion thereof, height may be the height of the image or a portion thereof, and the channels or depth may correspond to Red, Blue, and Green (RBG) color channels. The nodes of some layers of a CNN, such as the convolutional and pooling layers, are often only connected to a small region of the output of the layer before it, instead of being connected to all of the nodes of the prior layer, as in a fully-connected layer.

Examples of the functionality of different types of layers in DNNs are provided as follows. Convolution layers, for example, may transform an input feature map to an output feature map. Convolution can sometimes be considered as a filter; and convolutional layers can filter an input feature map for information of interest, such as edges or other features of objects within an image. In some cases, an activation layer follows a convolution layer. A commonly used activation layer is a Rectified Linear Unit (ReLU) layer that performs threshold operations, such as setting input values less than zero to zero. Other activation functions besides and/or in addition to ReLU that may be included in a DNN include an identity function and non-linear activation functions, such as Sigmoid, Tansig, Tanh, leaky ReLU, and clipped ReLU, among others. The learned features extracted and output by convolution and activation layers are sometimes referred to as activation data or simply as activations. The activations become the input to the next layer of the network.

A cross-channel normalization layer may replace input elements with normalized values. Nonetheless, layers implementing other normalization techniques, such as Local Response Normalization (LRN) and/or batch normalization, may be included in a DNN Pooling layers may perform downsampling. For example, pooling layers may return the maximum values or the average values of regions of its input. Nonetheless, layers implementing other pooling techniques besides max-pooling and average-pooling may be included. Fully connected layers may combine all of the features, e.g., local information, learned by the previous layers, for example to identify larger patterns in the input data, e.g., input images, as compared to patterns identified in feature maps by convolutional layers.

Some DNNs may include a softmax layer after the Convolution and Fully Connected layers. A softmax layer is optional and may be considered as applying post-processing functionality. In some embodiments, a softmax layer may perform an activation function, for example to generate a value between 0 and 1 for each node of the softmax layer. For example, for a given input image, the values generated by a softmax layer may be interpreted as relative measurements of how likely it is that the image falls into each class. For a DNN performing image classification, exemplary classes include objects that may be detected in the images, such as dog, cat, bird, car, pedestrian, bicycle, cup, pencil, etc. A classification or other layer may follow the softmax layer. At least some layers of a DNN, such as convolutional layers, may have adjustable network parameters, such as weights and biases.

It should also be understood that a DNN may include additional and/or other layers. For example, a DNN also may include one or more dropout layers, which may randomly set some of the layer's outputs to zero and is used during training. A regression layer may be included in a DNN designed to solve regression problems.

After a DNN is created, it is trained. A DNN may be trained using training data. With supervised training, the training data is labeled with the correct classifications or results. Before training, the DNN's adjustable parameters may be set to default or initial values. During training, adjustable network parameters are tuned to learnt values. The training data may be run forward through the DNN, e.g., from the input layer to the output layer. Because the tuning of a given network parameter to make a correct prediction may result in a previously correct prediction becoming incorrect, it often takes many iterations and a large set of training data to train a DNN, e.g., to converge on the values of network parameters while minimizing the accuracy loss. Once trained, a DNN may be used to perform inference, e.g., to classify input data that the network has not seen before.

Data types may be assigned to input data, internal data, such as network parameters, and output data, such as activation values, of different layers of a DNN, or to other numeric data utilized or generated by a DNN. Data type refers to the way in which numbers are represented in computer memory. A data type may determine the amount of storage allocated to a number, the method used to encode the number's value as a pattern of binary digits, and the data types to be used when two numbers of this data type are used as operands in an operation. Different data types may have different precision, representable range, computational performance when used in operations, and memory usage. Exemplary numeric data types include integers, floating point, fixed point, and Boolean. Floating point data types represent numeric values in scientific notation. The IEEE Standard for Floating Point Arithmetic 754 (IEEE 754) defines standards for an arithmetic format of data representation for floating point data, rounding rules, operations, and exception handling behaviors. The floating point formats include 64-bit double-precision binary floating point (double), 32-bit single-precision binary floating point (single), and 16-bit half-precision binary floating point (half), among others. A programming language may include several built-in data types, e.g., data types defined by the language itself as opposed to data types defined by users of the programming language. For example, built-in numeric data types of the MATLAB language include int8, int16, int32, single and double, among others. Examples of user defined data types include classes, structure (struct), and enumerated (enum), which defines a set of enumerated values. A fixed point data type may include a word length, a fraction length, and a sign attribute, for example signed or unsigned. A signed fixed-point data type may be represented using one's complement, two's complement, or a sign bit.

A DNN may have millions of parameters and may perform billions of arithmetic operations to operate on the input data, e.g., classify input data, such as an image. For example, the well-known AlexNet Convolutional Neural Network (CNN), which can classify images to 1000 categories, has 230 million parameters and performs one and a half billion operations to classify one image of size 227x227x3. A user may select initial values for the network parameters of a DNN. During training, the DNN may determine final values, e.g., learned parameters. Typically, numeric values, e.g., all numerical values, of a DNN are represented both in software and in hardware in single precision floating point data type. Accordingly, training a DNN in single precision and running inference on a DNN trained in single precision requires hardware that supports single precision floating point data type, e.g., a data processing system that has large memory and processing resources, such as multi-core Central Processing Units (CPUs). In some cases, however, a trained DNN may need to be deployed, e.g., loaded and run, on a deployed system having limited memory or processing resources, such as embedded Graphics Processing Units (GPUs), Embedded ARM processors, Field Programmable Gate Array (FPGA) devices or Application-Specific Integrated Circuit (ASICs) in mobile phones, microcontrollers or similar edge devices. To deploy a trained DNN, code may be generated for the DNN, such as assembly code, high-level C/C++ code, binary bitstreams, etc. This generated code may need to implement data types supported by the deployed system, such as GPU integer cores, DSP slices or DSP blocks of FPGAs, etc. The generated code may be hand-written or automatically emitted by a code generator.

A DNN can be a part of a larger software application or a standalone software application on its own that, for example, may classify objects, such as cars, trucks, lane markings and road signs for automated driving applications. In other examples, a DNN can be used in a hand-held defibrillator to analyze and classify different arrhythmias from real-time data in emergency situations. Configuring the application containing one or more DNNs to run on a deployed system, such as an embedded GPU, System on Chip (SoC), FPGA, etc. is a complex and difficult design problem. For example, the memory required to store parameters and activations of the DNNs and the number of operations to be performed may exceed the available resources of the deployed system. The real-time response of these systems may be critical. Most FPGAs do not support floating point operations, and those that do may take a long processing time, failing to meet the real-time or other latency requirements.

In the context of deep learning, quantization refers to the process of reducing the number of bits that a DNN originally, e.g., before quantization, uses to represent numerical values, producing a quantized version of the DNN. For example, a DNN that performs image classification and object detection, such as VGG16 or ResNet, may include convolution and fully connected layers whose weights and biases are represented as a 32-bit single precision data type. As a result, during execution of the DNN, these layers may be memory-intensive and computationally intensive. To reduce the memory and computation demands of these layers, the weights and biases could instead be represented as an 8-bit integer data type with a binary point scaling format (INT8). In addition to choosing a data type with reduced bit-width, quantization may also involve selecting a scaling factor or quantization factor that may be used to convert original numeric values into the range supported by the new, reduced bit-width.

Quantization can significantly reduce the memory requirements of a DNN. In addition, integer computations can be faster than floating point computations. However, quantization can reduce the numerical accuracy of computations within the DNN. For example, the INT8 data type has significantly lower precision and dynamic range than the single precision floating point data type. For example, while a single precision floating point data type has a representable range of approximately $-3.4 \times 10^{38}$ to $3.4 \times 10^{38}$ and can represent a minimum positive value of about $1.4 \times 10^{-45}$, the representable range of the INT8 data type (without scaling) is approximately -128 to 127 and the minimum positive value that can be represented is 1. In addition, while the numeric value 0.1 can be closely approximated in single precision, it cannot be closely represented in INT8 and may even be represented as value 0 depending on the rounding modes. Furthermore, convolution and fully connected layers of a DNN may involve storing intermediate results in accumulators. Changing the data type of such accumulators from single precision floating point to INT8 may result in overflows, i.e., the computed number is greater than the upper limit of the data type's dynamic range, and therefore, the computed number cannot be represented. As a result, quantization, when not well designed, can render numerical errors in DNN computations. A trained DNN deployed with such quantization can make erroneous inferences and lead to potential malfunction of the physical systems onto which the DNN is deployed. It may also suffer erroneous performance.

The present disclosure relates to systems and methods for quantizing a trained Deep Neural Network (DNN) or an application including one or more trained DNNs to meet desired performance objectives, such as one or more of throughput, inference accuracy, power/energy usage, memory usage, latency, and execution speed, e.g., number of images classified per unit time. With the present disclosure, a user may choose the points of the DNN or application that are to be quantized. The systems and methods may propose quantization solutions for the selected points and different quantization solutions may be proposed for different points, resulting in a heterogenous quantization of the DNN or application. For example, the systems and methods may propose different quantization solutions for different layers of the DNN and/or for different points associated with a given layer, for example by applying different scaling factors and/or bit widths at the different points. In addition, the systems and methods may utilize the performance objectives, for example as constraints, when proposing the quantization solutions for the selected points of the DNN or application. The constraints may be based on limitations of the hardware on which a quantized version of the DNN or application quantization will be deployed, accuracy requirements, execution speed requirements, etc. Code may be generated for the quantized version of the DNN or application, and the generated code may be loaded and run on a deployed system that meets the desired performance objectives.

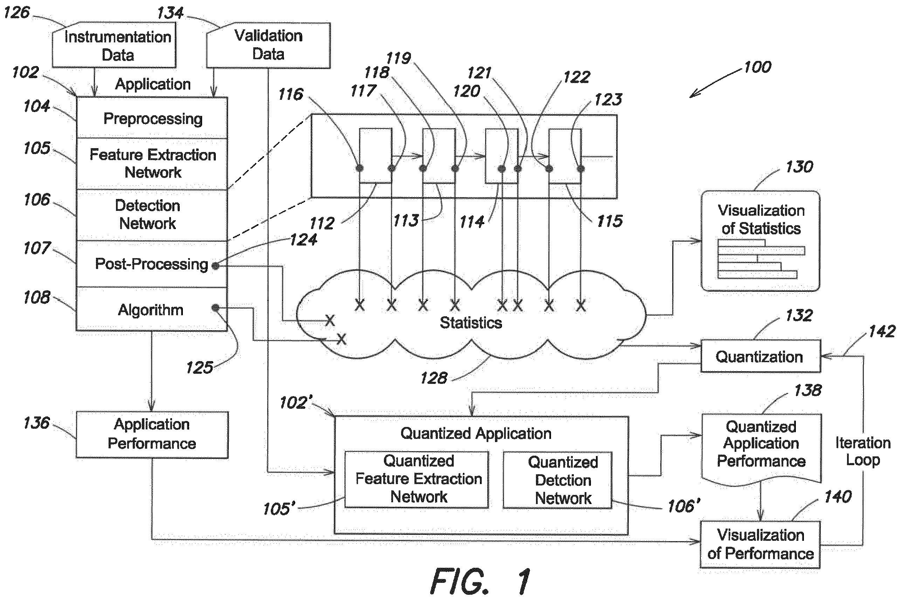

Fig. 1 is a schematic illustration of an example workflow 100 in accordance with one or more embodiments. The workflow 100 may apply to an application 102 or one or more portions thereof. As an example, the application 102 may be an object detection application, such as the You Only Look Once (YOLO) object detection application. The YOLO application can be used in a vehicle to perform blind spot detection, lane departure detection, vehicle detection, etc. The application 102 may include a plurality of sections 104-108 one or more of which may implement Deep Neural Networks (DNNs). For example, the application 102 may include a pre-processing section 104, which may crop and resize images to be processed, a DNN that performs feature extraction 105, a DNN that performs detection 106, a post-processing section 107, and an algorithmic section 108 that may perform some functionality based on detected objects. The DNN sections 105 and 106 may each include a plurality of layers, such as convolution layers, activation layers, pooling layers, etc. For example, as shown in the expanded view, the detection network 106 may include four layers 112-115. The application 102 may be created to run on a workstation with a CPU, e.g., for development and/or evaluation purposes. Accordingly, the data type of data values computed and/or utilized by the application 102, including the feature extraction and detection DNNs 105 and 106, may be double precision floating point, single precision floating point, or a combination of both.

The systems and methods may receive information, e.g., through user specification, on the resources available on the deployed system, such as estimated memory needed to store network parameters, numeric data type/bit-width of GPU compute cores, numeric data type/bit-width of FPGA DSP slices, and the hardware accelerator used by the deployed system, among resources. The systems and methods may instrument the application to observe data values generated during execution of the instrumented application, such as activations and network parameters of a DNN, intermediate results computed by DNN layers, input, output, and intermediate data computed at other portions of the application, etc. The systems and methods may generate statistics and/or derive attributes for the observed data values. Exemplary statistics and/or attributes include, for example, minimum data value, maximum data value, number of zero occurrences, whether the observed data value is always an integer, and dynamic range and precision information. More specifically, the systems and methods may establish a plurality of instrumentation points at which data values are to be observed. In some implementations, the instrumentation points can be at the boundaries of the DNN layers. In some situations, the instrumentation points can also be within a layer of the DNN. For example, as shown, several instrumentation points 116-123 may be established at the detection network 106. Specifically, instrumentation points 116-119 observe input and output data values for layers 112 and 113. Instrumentation point 120 observes data values generated internally to the layer 114. Instrumentation point 121 observes output data values at layer 114. Instrumentation points 122 and 123 observe input and output data values for layer 115. In some embodiments, instrumentation points may be established on a per-channel and/or per tensor basis. For example, different scaling factors may be used on different channels. In addition or independently of instrumenting the DNN, instrumentation points may be established at other sections of the application 102 as well. Specifically, instrumentation point 124 observes data values generated at the post-processing section 107 while instrumentation point 125 observes data values generated at the algorithmic section 108.

The systems and methods may execute the application 102 and/or one or both of the DNN(s) 105 and 106 using sample input data. For example, instrumentation data 126, which may be input data to be inferenced, may be obtained and the application 102 and/or one or both of the DNNs 105 and 106 run on the instrumentation data 126. During execution of the application 102 and/or one or both of the DNN(s) 105 and 106, the systems and methods may observe data values generated at the instrumentation points 116-125, which as described above may be implemented using single or double precision floating point representations, generate statistics from the observed data values, and/or store the statistics in one or more logs as indicated at 128. The systems and methods may organize and arrange the statistics derived for observed data values and present them in one or more visualization tools as indicated at 130. The visualization tools may present the statistics in one or more numeric data views, such as spreadsheets, tables, charts, plots, heat maps, histograms, etc.

The visualization tools may provide a user with one or more windows into the application and/or one or both of the DNN(s) 105 and 106 through which a user may see the attributes of data values at key points of the application. Based on the information presented in the visualization tools, a user may direct quantization of the application 102 and/or one or both of the DNNs 105 and 106 to enable deployment on the deployed system in a manner that meets one or more performance objectives. The visualization tools may present the statistics and/or attributes in a manner that facilitates a user in setting options for quantizing the application 102 and/or one or both of the DNNs 105 and 106, for example by balancing among the performance objectives, such as accuracy, memory usage, inference speed, etc.

The systems and methods may evaluate the generated statistics and propose replacing the single or double precision floating point data types with new data types for at least some of the observed data values and may determine one or more scaling factors as indicated by the quantization step 132. The systems and methods may apply one or more analyses when choosing the new data types and the scaling factors, such as data inclusion threshold analysis and outlier analysis. Options may be specified that control the quantization step 132, which may implement and/or apply rules for proposing new data types and scaling factors. For example, suppose the statistics reveal that a given data value, such as the output data generated at the layer 113, is always a positive integer within a narrow range. The quantization step 132 may propose replacing the single precision floating point data type used for the output data of the layer 113 with an unsigned 8-bit integer data type, thereby reducing the hardware memory requirements for the layer 113. The quantization step also may propose a scaling factor for the unsigned 8-bit integer data type. The quantization step 132 may propose other data types and scaling factors for other observed data values based on the derived statistics.

However, not all of the data values observed at the instrumentation points may be quantizable for given hardware specifications. For example, the ability to quantize certain observed data values may depend on the availability of hardware acceleration libraries for supporting the functionality that generates the data values. If the application 102 and/or one or both of the DNN(s) 105 and 106 is to be deployed on a GPU, a target library of cuDNN may be chosen. If the application 102 and/or one or both of the DNN(s) 105 and 106 is to be deployed on an Intel CPU, the MKL-DNN target library may be chosen. If the application 102 and/or one or both of the DNN(s) 105 and 106 is to be deployed on an ARM embedded processor, the ARM compute acceleration library may be chosen. In some embodiments, the available hardware acceleration libraries may be derived from information identifying the system, e.g., the target hardware, on which the application 102 and/or one or both of the DNN(s) 105 and 106 following quantization is to be deployed. In addition, for some targets, it may not be possible to observe at least some intermediate values within a layer of a DNN. The systems and methods may implement a quantization strategy in which the data type of such unobservable points is inherited via rules, for example from the data type applied to the layer's input data.

In some embodiments, quantization may be performed as part of a code generation process for the application 102 and/or one or both of the DNN(s) 105 and 106. In some cases, the code generation process may alter the structure of the network, e.g., DNN(s) 105 and/or 106. For example, one or more optimizations may be performed during code generation that alter the structure of the network, such as layer fusion, and/or the structure of the network may be changed to match the hardware acceleration libraries being used, etc. If the code generation process changes the structure of the network, then the code generator may also alter the scaling factors to conform to the new structure of the network.

As described, the quantization may be based on the statistics and/or attributes, and the options and constraints or thresholds imposed by the available resources of the deployed system. For example, in addition to constraints imposed by available hardware acceleration libraries, some exponential or trigonometric functions may not have a suitable implementation for the INT8 data type, which may result in the data types associated with those functions not being quantized. In other cases, a Lookup Table (LUT) may be used to approximate a network function, such as a sigmoid function. A suitable LUT may have limited input/output range and precision and/or a certain memory size, and these attributes may impose constraints on quantization.

The systems and methods may present the proposed data types resulting from the quantization in one or more visualization tools. The systems and methods may also generate a quantized version of the application as indicated at 102' or quantized versions of one or both of the DNNs as indicated at 105' and 106'.

The systems and methods may validate the quantized version of the application 102' or the quantized version of one or both of the DNNs 105' and 106'. For example, the systems and methods may execute the original application 102 or one or both of the original DNNs 105 and 106 and the quantized application 102' or the quantized version of one or both of the DNNs 105' and 106' on validation data 134. The systems and methods may derive performance information for the original application 102 or one or both of the DNNs 105 and 106 as indicated at 136 and/or for the quantized version of the application 102' or the quantized version of one or both of the DNNs 105' and 106' as indicated at 138. Exemplary performance information may include, for example, inference accuracy, memory usage, and processing time. Performance of the quantized application 102' or the quantized version of one or both of the DNNs 105' and 106' may include functional performance, such as inference accuracy, and parafunctional or nonfunctional performance, such as memory usage and processing time. The systems and methods may present the performance data for the original application 102 and/or the quantized version 102' or for the original DNNs 105 and 106 and the quantized versions of the DNNs 105' and 106' in one or more visualization tools as indicated at 140. A user may evaluate the performance information included in the visualization tool 140 and direct the systems and methods to take one or more actions. In addition, visualizing code performance or validation information can be done based on statically analyzing the code (or in-memory representations of the code) or executing the code generated following the quantizing. For example, suppose the visualization tool 140 reveals that the inference accuracy of the quantized version of the application 102' or the quantized version of one or both of the DNNs 105' and 106' is significantly less than the inference accuracy of the original application 102 or the original DNNs 105 and 106. In response, the user may repeat at least a portion of the workflow as indicated by iteration loop arrow 142. For example, the user may change one or more of the options and/or rules and rerun the workflow starting at the quantization step 132. For example, the user may mark one or more of the layers 112-115 of the detection network 106 as excluded from quantization, thereby retaining the single or double precision floating point data type for that layer as originally implemented. Or, the user may change the instrumentation points, e.g., adding new instrumentation points.

The workflow 100 or portion thereof may be repeated until a final quantized version of the original application 102 or the DNNs 105 and 106 having acceptable performance is achieved. As described, a user may interact with the quantization process, at the level of layers or even within layers, thus directing or guiding the systems and methods in proposing quantization solutions.

The systems and methods may include tools for sharing the quantized application or the quantized DNNs with other members of a development team. For example, the systems and methods may package and/or convert this final quantized version into a format for sharing with other members of a development team.

In some embodiments, the systems and methods may deploy the quantized version of the application or the quantized version of the DNNs 105 and 106 to the deployed system. For example, the systems and methods may generate code for the quantized application or the quantized version of the DNNs 105 and 106 and the generated code may be loaded and executed at the deployed system, e.g., the target hardware, and/or used to synthesize one or more programmable logic devices. Quantization as described herein may be performed as part of code generation for a DNN and/or an application containing a DNN. In other embodiments, quantization may be performed independently of generating code.

Prior systems, such as TensorRT and Deephi, target particular hardware, e.g., only CPUs/GPUs or only FPGAs for example, and/or hardware from a particular vendor, such as FPGAs from Intel Corp. The systems and methods of the present disclosure can use abstract specification information of target hardware and the availability of hardware accelerators to propose any possible bit widths during quantization, thus quantizing an application or DNN for any target hardware from any vendor. The systems and methods of the present disclosure may thus provide the user more flexibility in the choice of hardware. In addition, the systems and methods may quantize points inside layers of a DNN in addition to layer boundaries. Different quantization may be proposed for different DNNs of an application, for different layers of a DNN, and/or for different points within a layer of a DNN. For example, one DNN or layer may be quantized to INT8 while another DNN or another layer of the same DNN may be quantized to a 16-bit fixed point data type. In addition, the systems and methods may generate and present performance information for a quantized application or DNN without generating code for the application or DNN and/or without running generated code for the quantized application or DNN on target hardware.

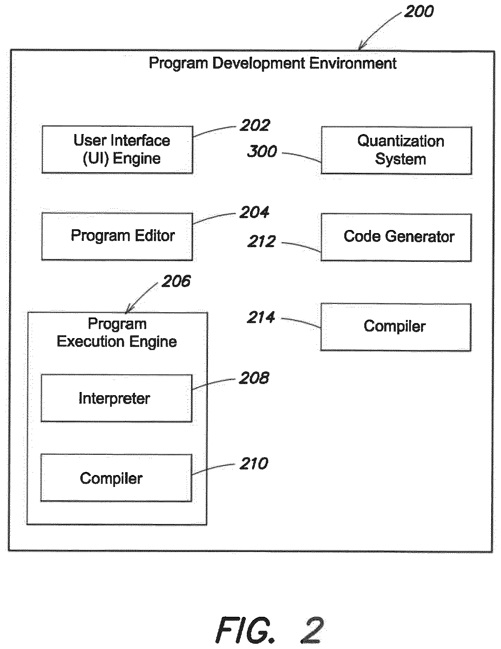

Fig. 2 is a schematic illustration of an example program development environment 200 for creating, running, and quantizing computer application programs in accordance with one or more embodiments. The program development environment 200 may include a User Interface (UI) engine 202, a program editor 204, a program execution engine 206, and a quantization system 300. The program execution engine 206 may include an interpreter 208 and/or a compiler 210. In some embodiments, the program development environment 200 may also include a code generator 212 and a compiler 214, which may be different from the compiler 210 of the program execution engine 206. For example, the compiler 210 of the program execution engine 206 may be a just-in-time compiler for compiling code written in for example the MATLAB programming language. The compiler 214, on the other hand, may be a C compiler or the *nvcc* compiler from Nvidia Corp. of Santa Clara, CA, among others.

The UI engine 202 may create and present one or more User Interfaces (UIs), such as Graphical User Interfaces (GUIs) and/or Command Line Interfaces (CLIs), on a display of a workstation or other data processing device. The UIs may be operated by a user to initiate various program development and quantization tasks. For example, a user may open, write, edit, and save an application program. The program execution engine 206 may run and/or execute an application, such as the application 102 that includes the DNNs 105 and 106. The quantization system 300 may generate the quantized application 102' or quantized DNNs 105' and 106'. The code generator 212 may generate code based on the quantized application 102' or quantized DNNs 105' and 106'. The generated code may be provided to the compiler 214, which may produce executable code. In some embodiments, the compiler 214 may utilize one or more sets of predefined Application Programming Interfaces (APIs), which may be part of one or more hardware acceleration libraries, to produce the executable code. The executable code, which may be in the form of assembly code, may be deployed on a deployed system.

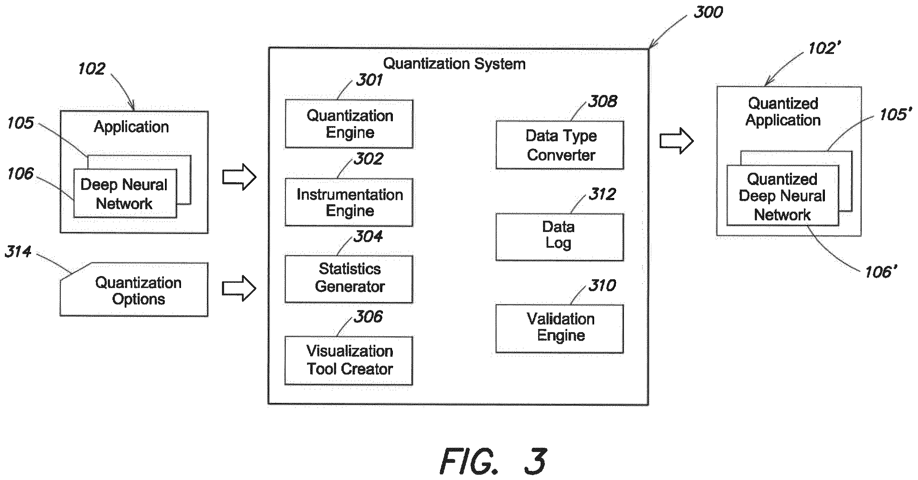

Fig. 3 is a functional diagram of an example of the quantization system 300 in accordance with one or more embodiments. The quantization system 300 may include a quantization engine 301, an instrumentation engine 302, a statistics generator 304, a visualization tool creator 306, a data type converter 308, and a validation engine 310. Statistics generated by the statistics generator 304 may be stored at one or more data stores, such as a log 312. The quantization system 300 may access or otherwise receive one or more DNNs or an application containing one or more DNNs, such as the YOLO object detection application 102 including the DNNs 105 and 106. The quantization system 300 may also receive one or more options indicated at 314, for example for controlling the quantization of the application 102 and for identifying the instrumentation data 126 and the validation data 134. The quantization system 300 may produce the quantized application 102' or quantized DNNs 105' and 106'. In some embodiments, the quantization system 300 may quantize the application 102 and/or DNNs 105 and 106 based on a quantization scheme, such as 8-bit dynamic fixed point scaling, arbitrary bit-width fixed point scaling, etc.

The code generator 212 may generate code for the quantized application 102' or quantized DNNs 105' and 106'. The generated code may be provided to the compiler 214, which may translate the generated code into executable code. The executable code, which may be in the form of assembly code, may be deployed on a deployed system, such as target hardware.

The figures of the present disclosure, including Figs. 1, 2, and 3, are provided by way of example. In practice, the present disclosure may be implemented in other ways. For example, the workflow 100, the program development environment 200, and/or the quantization system 300 may include additional steps or components, fewer steps or components, different steps or components, or differently arranged steps or components than those shown. Additionally, or alternatively, one or more components of the program development environment 200 and/or the quantization system 300 may perform one or more functions described as being performed by another one or more components of the program development environment 200 and/or the quantization system 300. As examples, the code generator 212, compiler 214, and/or the quantization system 300 may be separate from the program development environment 200 and/or the quantization system 300 may be part of the code generator 212, which combined entity may be separate from the program development environment 200.

Suitable program development environments include the MATLAB® programming system, including the Neural Network Toolbox, the Deep Learning Toolbox, and the Deep Learning HDL Toolbox, and the Simulink® model-based design system, including code generation tools, such as GPU Coder, HDL Coder, MATLAB Coder, and MATLAB Coder Interface for Deep Learning, from The MathWorks, Inc. of Natick, MA. Other code generation tools include the open source TVM deep learning compiler stack from the Apache Software Foundation, the open source Graph Lowering (Glow) machine learning compiler, and the open source PlaidML tensor compiler, among other. In some embodiments, the application 102 and/or portions thereof, such as the DNNs 105 and 106, may be created and/or trained within a deep learning framework. Exemplary deep learning frameworks include Caffe (Convolutional Architecture for Fast Feature Embedding) originally developed at University of California, Berkeley and now available under open source license through GitHub, the Caffe2 deep learning framework from Facebook, Inc. of Menlo Park, CA, the Microsoft Cognitive Toolkit (CNTK) from Microsoft Corp. of Redmond, WA, the TensorFlow framework from Google Inc. of Mountain View, CA, the Theano numerical computation library for Python from the University of Montreal, the open source Torch machine learning library available through GitHub, the Chainer open source framework for deep learning algorithms, the open source PyTorch machine learning library used with various Deep Learning frameworks, the Neural Network Toolbox and the Deep Learning Toolbox both from The MathWorks, Inc., the MatConvNet toolbox for the MATLAB programming system available from GitHub, the LightNet deep learning framework for MATLAB from Cornell University, and the Compute Unified Device Architecture (CUDA) from NVIDIA Corp. of Santa Clara, CA, and Darknet an open source neural network framework written in C and CUDA by Joseph Redmon, among others. It should be understood that new frameworks and new target hardware are being developed and released, and that the techniques and embodiments described in the present disclosure may be used with such future frameworks and target hardware. Deep learning frameworks, such as those described above, include interfaces for computer programming languages, such as C/C++, Python, Lua, Java, and Julia, among others. The MATLAB® programming language and the Simulink® simulation environment provide a number of high-level features that facilitate algorithm development and exploration, and support model-based design. Exemplary high-level features include dynamic typing, array-based operations, data type inferencing, sample time inferencing, and execution order inferencing, among others.

The application 102 or one or both of the DNNs 105 and 106 may be in source code format. In some embodiments, either or both of the DNNs 105 and 106 may be objects supported by the Neural Network Toolbox or the Deep Learning Toolbox from The MathWorks, Inc. of Natick, MA, such as the SeriesNetwork object and the DAGNetwork object. The SeriesNetwork object is a neural network for deep learning with layers, including a single input layer and a single output layer, arranged one after the other. The DAGNetwork object is a neural network for deep learning with layers arranged as a directed acyclic graph in which layers can have inputs from multiple layers and outputs to multiple layers. The SeriesNetwork and DAGNetwork objects may be created in the MATLAB environment or imported from another environment. A trained DNN may be imported from Caffe, Torch, TensorFlow, Darknet, Lightnet, Theano, Microsoft Cognitive Toolkit (CNTK), or another environment as a MATLAB SeriesNetwork or DAGNetwork object. For example, a pre-trained convolutional neural network model from Caffe may be imported as a SeriesNetwork object using the MATLAB command 'importCaffeNetwork'. It should be understood that the SeriesNetwork and DAGNetwork objects are for illustrative purposes only and that the present invention may be used with other applications having other forms of DNNs.

A DNN or portion thereof also may be represented in a .prototxt which is a configuration file used in Caffe, .onnx which is an Open Neural Network Exchange Format, .mlmodel which is a COREML format, .PKL which is a Pickle serialized file for serializing Theano objects, .mat which is file format used by MATLAB, or other file. Nonetheless, in other embodiments, the application 102 and/or portions thereof may be a textual program, a graphical model, or a combination textual/graphical program. Suitable text-based source programs include MATLAB programs, C programs, C++ programs, FORTRAN programs, Java programs, Mathematica programs, Python programs, Julia programs, Lua programs, ADA programs, Octave programs, and MathScript programs, among others.

In some embodiments, the quantization system 300 or portions thereof may be implemented through one or more software modules or libraries containing program instructions that perform the methods described herein, among other methods. The software modules may be stored in one or more memories, such as a main memory, a persistent memory, and/or a computer readable media, of a data processing device, and may be executed by one or more processors. Other computer readable media may also be used to store and execute these program instructions, such as one or more non-transitory computer readable media, including optical, magnetic, or magneto-optical media. In other embodiments, the quantization system 300 or portions thereof may be implemented in hardware, for example through hardware registers and combinational logic configured and arranged to produce sequential logic circuits that implement the methods described herein. In other embodiments, various combinations of software and hardware, including firmware, may be utilized to implement the systems and methods of the present disclosure.

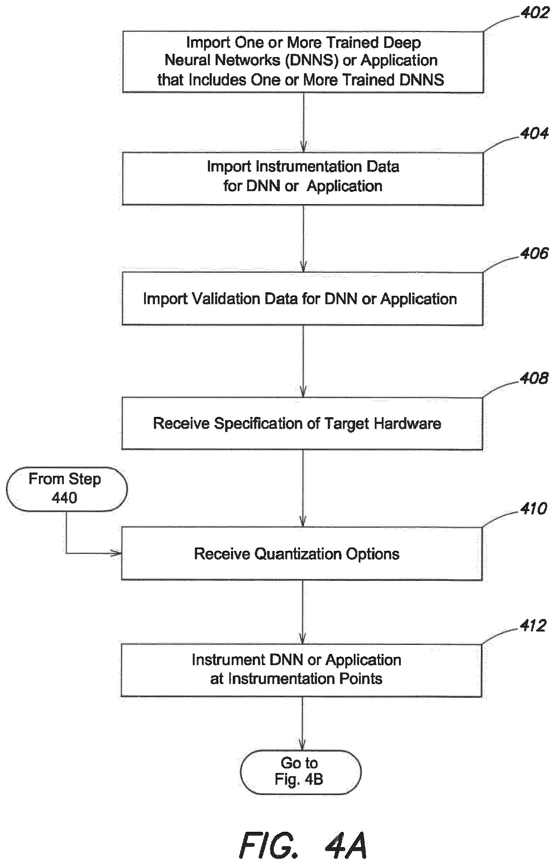

Figs. 4A-E are partial views of a flow diagram of an example method in accordance with one or more embodiments. The flow diagrams described herein are for illustrative purposes only. In some embodiments, one or more of the illustrated steps may be omitted, additional steps may be added, the order of the illustrated steps may be changed, one or more illustrated steps may be subdivided into multiple steps, multiple illustrated steps may be combined into a single step, and/or one or more portions of the flow diagrams may be separated into multiple, separate and distinct flow diagrams.

The quantization system 300 may import or otherwise receive or access one or more trained deep neural networks (DNNs) or an application containing one or more trained DNNs as indicated at block 402. In some embodiments, the UI engine 202 may present one or more User Interfaces (UIs) on a display of a data processing device. A user may interact with the one or more UIs to select the DNN or application to be quantized. The one or more UIs may be Graphical User Interfaces (GUIs), Command Line Interfaces (CLIs), Application Programming Interfaces (APIs), combinations thereof, and/or other interfaces. In some embodiments, the UIs, may be implemented as part of a Deep Network Quantizer Application (App) running on a workstation or other data processing device.

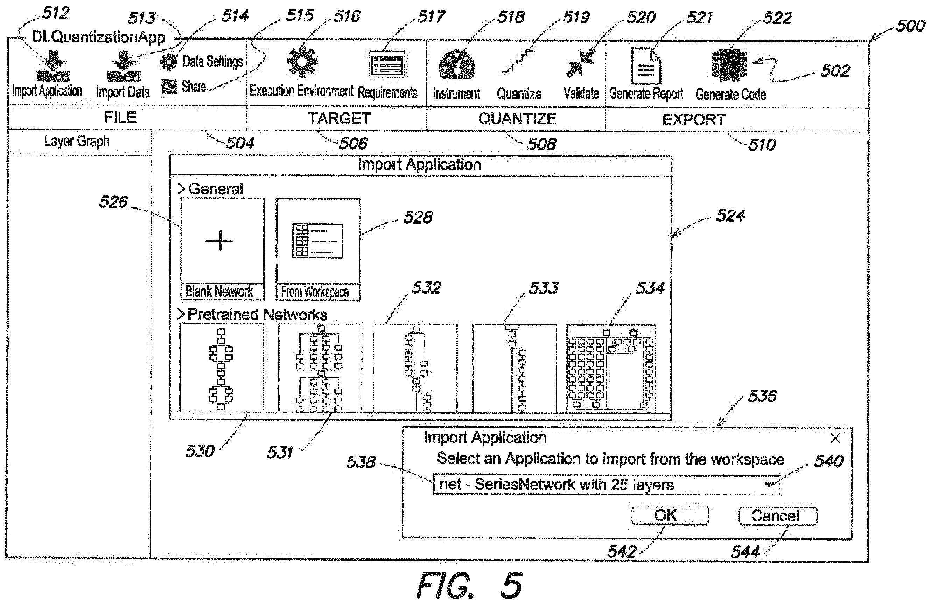

Fig. 5 is a schematic illustration of an example User Interface (UI) 500 for selecting, e.g., identifying and importing, an application to be quantized in accordance with one or more embodiments. The UI 500 includes a toolstrip 502 having a plurality of command buttons that may be arranged in a workflow for quantizing an application. The command buttons may be organized into groups corresponding to different phases of the quantization workflow, such as File 504, Target 506, Quantize 508, and Export 510. The File group 504 may include an Import Application command button 512 (or an Import DNN command button), an Import Data command button 513, a Data Settings command button 514, and a Share command button 515. The Target group 506 may include an Execution Environment command button 516 and a Requirements command button 517. The Quantize group 508 may include an Instrument command button 518, a Quantize command button 519, and a Validate command button 520. The Export group 510 may include a Generate Report command button 521 and a Generate Code command button 522.

In response to selection of the Import Application/DNN command button 512, e.g., by a user, the UI engine 202 may present a dialog 524 from which a DNN or an application to be quantized may be selected. The dialog 524 may include a Blank Network command button 526 from which a DNN may be selected and a From Workspace command button 528 from which an application stored in a workspace may be selected. The dialog also may include command buttons 530-534 that correspond to respective pretrained DNNs that may be selected. In response to selection of the From Workspace command button 528, e.g., by the user, the UI engine 202 may open a File Open dialog 536. The File Open dialog 536 may include a data selection field 538 having a drop down button 540. In response to selection of the drop down button 540, the UI engine 202 may present a listing of applications stored in the workspace and a user may select one of the applications, such as net - SeriesNetwork with 25 layers as indicated. The File Open dialog 536 may include OK and Cancel command buttons 542 and 544, respectively.

In some embodiments, the visualization tool creator 306 may present information on the selected application in one or more UIs. Suppose, for example, that the user selects the AlexNet Convolutional Neural Network (AlexNet), which classifies images to 1000 categories, for quantization. AlexNet has 230 million parameters and performs one and a half billion operations to classify one image of size 227x227x3.

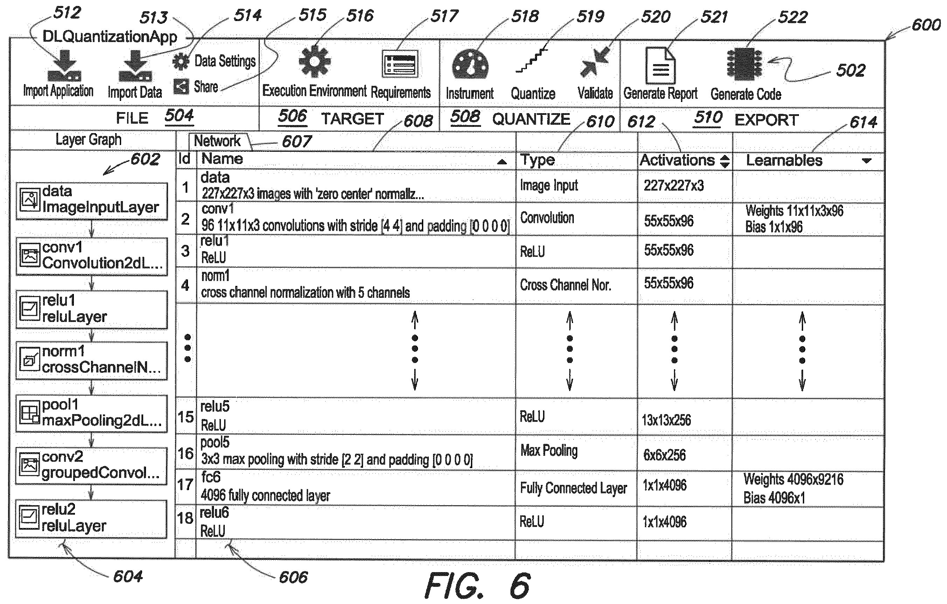

Fig. 6 is a schematic illustration of an example User Interface (UI) 600 presenting information on a selected application/DNN in accordance with one or more embodiments. The UI 600 may include the toolstrip 502 with the command buttons 512-522. The UI 600 may present a graph view 602 of at least part the selected application or DNN to be quantized in a pane 604 labeled Layer Graph. The graph view 602 may present a graphical representation of the selected application or DNN in which the layers of the DNN are shown as blocks or other icons. The blocks may be interconnected by arrows illustrating the interconnection among the layers of the DNN portion(s). The UI 600 may also include a tabbed main pane 606 that may present different information and/or views depending on the selection of a particular tab associated with the main pane 606, e.g., by a user. As illustrated, a tab 607 labeled Network may be selected, and a listing of the network layers of the DNN portion of the application may be presented in the main pane 606. The network view may present the network layers in the same sequence as they are included in the DNN. The network view presented in the main pane 606 may be arranged as a table with rows for the DNN's layers. The columns may include a name column 608 presenting the name of the respective layer, a type column 610 presenting the type of the layer, an activations column 612 presenting the size of the output volume of the layer, and a learnables column presenting the layer's adjustable parameters, if any. Exemplary adjustable parameters include the weights and biases of a convolution layer whose values are derived during training of the DNN

Returning to Fig. 4A, the quantization system 300 may also import, e.g., receive or access, instrumentation data and validation data for the imported DNN or application, as indicated at blocks 404 and 406. The instrumentation data and the validation data may be input data for processing by the DNN or application and thus by the quantized DNN or application. Like training data, the instrumentation data and the validation data may be input data that is processed by the imported DNN or application, which typically is already trained. As described, the instrumentation may be used to generate data at the instrumentation points of the imported DNN or application, and this generated data may then be used in quantizing the imported DNN or application. For a DNN or application that detects objects in images, such as AlexNet, the instrumentation and validation data may be a set of images with objects for detection. Preferably, the instrumentation data 126 fully covers the distribution of the functionality of the application and/or the DNN For example, if the DNN performs classification and includes 100 categories, the instrumentation data preferably covers all 100 categories. In some embodiments, the visualization tool creator 306 may present a visualization of the instrumentation data, such as a class distribution plot for instrumentation data used with a classification network. The class distribution plot may show how many images in the instrumentation data correspond to each category. Evaluation of the class distribution plot, e.g., by a user, may reveal whether any of the categories are underrepresented or overrepresented by the instrumentation data. If so, the user may revise the instrumentation data or select other instrumentation data. In response to the user selecting the Import Data command button 513, the UI engine 202 may present one or more UIs, such as a dialog, through which a user may select instrumentation data and validation data.

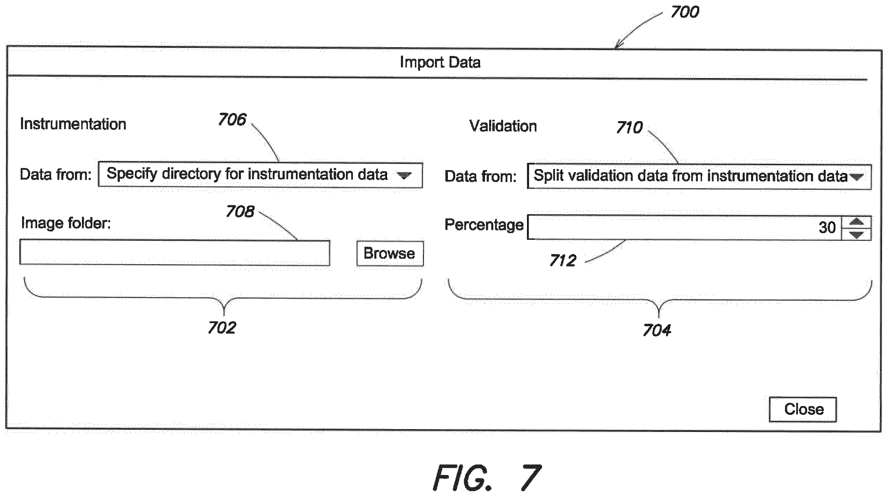

Fig. 7 is a schematic illustration of an example User Interface (UI) 700 for importing instrumentation data and validation data for a selected DNN or application in accordance with one or more embodiments. The UI 700 may include a region 702 for selecting instrumentation data and another region 704 for selecting validation data. The instrumentation data region 702 may include a drop down menu 706 from which available instrumentation data may be selected. The instrumentation data region 702 also may include a data entry field 708 for receiving a directory path for a file containing instrumentation data. The validation data region 704 may include a drop down menu 710 from which available validation data may be selected. The validation data region 704 also may include a data entry field 712 for specifying a percentage of a single data set to be used for both instrumentation and for validation. For example, if the data set is images, then 80% of the images may be used for instrumentation and 20% may be used for validation. In this way, the reuse of images for both instrumentation and validation may be avoided.

Returning to Fig. 4A, the quantization system 300 also may receive an indication of the execution environment on which a quantized version of the selected DNN or application is to be deployed, as indicated at block 408. The indication may include an identification of the target hardware on which a quantized version of the application is to be deployed and run. In response to the user selecting the Execution Environment command button 516, the UI engine 202 may present one or more UIs, such as a dialog, through which a user may identify the target hardware.

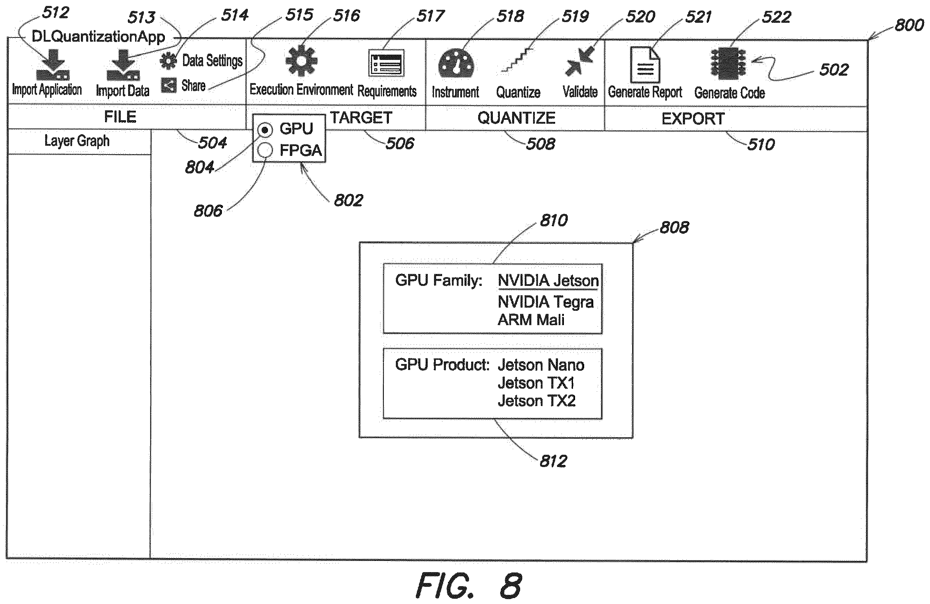

Fig. 8 is a schematic illustration of an example User Interface (UI) 800 for specifying an execution environment on which a quantized version of the selected DNN or application is to be run in accordance with one or more embodiments. The UI 800 includes the toolstrip 502 with the command buttons 512-532. A popup window 802 having radio selection buttons 804 and 806 for GPU and FPGA based execution environments may be presented. In response to selection of the GPU button 804, the UI engine 202 may present a dialog 808 through which additional information on the particular GPU-based execution environment may be received. The dialog 808 may include a drop down menu 810 through which a product family may be selected. Exemplary GPU product families include the Jetson and Drive embedded GPU families of products from NVIDIA, Corp., the Volta and Turing desktop GPU families of products from NVIDIA, and the Mali GPU family of products from ARM Ltd. of Cambridge, UK The dialog 808 may include another drop down menu 812 through which a particular product from the family selected in the menu 810 may be selected.

It should be understood that different FPGA product families may also be presented for selection, such as the Arria 10 series from Intel and the Zynq 7000 series from Xilinx, among others. In some embodiments, when the selected execution environment is an FPGA device, options may be provided for running the application and/or DNN within the program development environment 200 or generating a bitstream for the application and/or DNN and deploying and executing the bitstream to hardware connected to the program development environment 200. For example, a Hardware-in-the Loop (HIL) environment also may be provided and the bitstream may be deployed and executed on the HIL hardware.

In some embodiments, the UI 800 also may include elements for selecting configuration options for one or more execution parameters of the selected execution environment, such as the type of connection interface for configuring an FPGA execution environment, e.g., JTAG or Ethernet.

Returning to Fig. 4A, the quantization system 300 may receive one or more options for quantizing the application or one of the DNNs, as indicated at block 410. For example, in response to the user selecting the Instrument command button 518, the UI engine 202 may present one or more UIs, such as a dialog, through which a user may set one or more quantization options.

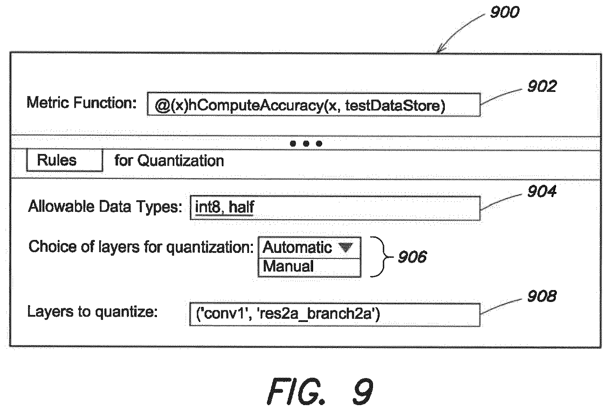

Fig. 9 is a schematic illustration of an example User Interface (UI) 900 through which one or more quantization options may be specified in accordance with one or more embodiments. The UI 900 may include a data entry field 902 through which a user may specify one or more metric functions to run during a validation phase. The metric function may evaluate the performance of a quantized version of the DNN or application, such as inference accuracy, processing speed, memory utilization, etc. The metric function may be custom designed by a user. For example, a user may write and/or import a metric function and identify the metric function in the data entry field 902. The one or more metric functions may be selected based on the type of application and/or the type of DNNs. For example, a user may select a precision/recall metric function for a classification DNN, a mean average precision metric function for an object detection DNN, a mean squared error metric function for a regression DNN, an Intersection over Union (IoU) metric function for a DNN that uses anchors and/or bounding boxes, for example when detecting multiple objects in an image, etc.

One or more of the following metric functions may be used:

| # | Metric Function | Definition | Notes on function arguments | |
|---|---|---|---|---|
| 1 | Mean squared error | $$\frac{1}{n}\Sigma\left(Y_{prediction} - Y_{actual}\right)^2$$ | n | number of predictions |
| | | | $Y_{prediction}$ | nx1 vector of predicted, e.g., inferred, values |
| | | | $Y_{actual}$ | nx1 vector of actual, e.g., correct, values |
| 2 | Accuracy | Ratio of correctly predicted observations over all observations TP + TN / (TP + TN + FP + FN) | TP is true positive, TN is true negative, FP is false positive, and FN is false negative. | |
| 3 | Intersection Over Union (IOU) | $$\frac{area\ of\ overlap}{area\ of\ union}$$ | This is a metric used in semantic segmentation and object detection where ground truth is an area of pixels in the image. Overlap in the formula refers to the number of pixels identified as detected object / segmented class in the ground truth and actual prediction. Union is the total number of pixels in ground truth and actual prediction. | |

It should be understood that other metric functions may be used.

The UI 900 also may include a data entry field 904 for indicating the allowable data types that may be proposed for the application or DNN during quantization. In some embodiments, the quantization system 300 may determine the data types supported by the target hardware. For example, hardware specification objects may be defined for one or more target hardware platforms. Among other information, these objects may list and/or describe the data types supported by the target hardware platform. The quantization system 300 may access and/or query the hardware specification object for the selected target hardware to discover the data types supported by the selected target hardware. The allowable data types may correspond to the quantization scheme being applied, e.g., an INT8 quantization scheme, an INT8/half precision quantization scheme, an arbitrary bit-width fixed point scaling scheme, etc. In addition, depending on the selected target hardware, a particular API and/or hardware acceleration library may be available, and the API and/or hardware acceleration library may only support a limited number of data types. Exemplary APIs and/or hardware acceleration libraries include NVIDIA's CUDA Deep Neural Network (cuDNN) library, NVIDIA's TensorRT, ARM's Compute Library, Intel's Deep Neural Network Library (DNNL) (formerly, MKL-DNN library), and Xilinx's Deep Neural Network Development Kit (DNNDK) package, among others. NVIDIA's TensorRT, for example, supports 8-bit integer (int8) and 16-bit floating point (half) data types.

For custom defined layers of a DNN, in which a user manually writes the code for the layer, e.g., using a floating point algorithm, the UI 900 may provide one or more elements that allow the user the choice of quantizing or not quantizing the custom layers. If a custom layer occurs within the DNN in between other layers of the DNN, and the custom layer is not to be quantized, the quantization engine 301 may choose not to quantize preceding or subsequent layers as well, e.g., to minimize data layout transforms. For custom layers of a DNN that are chosen to be quantized, the data type converter 308 may run a fixed point converter on the native implementation of the custom layers.

The quantization system 300 may present at least some of these data types in the data entry field 904. As illustrated, exemplary data types include 8-bit integer (int8) and half precision floating point (half). It should be understood that other data types may be presented and/or entered in the data entry field 904. The UI 902 also may include a drop down menu 906 through which portions of the application or one of the DNNs may be identified for quantization. The options presented by the drop down menu 906 may include Manual and Automatic. If the Manual entry is selected, a user may specify the portions of the application or one of the DNNs to be quantized. For example, the UI 902 also may include another data entry field 908 in which a user may identify points in the application or one of the DNNs that are to be quantized. If the Automatic entry is selected, the quantization system 300 may apply one or more rules to select portions of the DNN or application to be quantized. For example, if the target hardware is a GPU, then the quantization system 300 may choose the boundaries between layers of the DNN for quantization. One or more rules may identify layers not to be quantized, such as layers that implement Exponential or Trigonometric operations, e.g., because of lack of INT8 or other fixed point implementations, and layers that would require transformation of the layers' layouts or channel sizes and/or padding, for example to meet cuDNN INT8 implementations, e.g., because of the expense of such transformations and/or padding.

The quantization system 300 also may apply one or more rules for determining the quantization to be applied at the selected points of the application and/or DNN. The rules may involve one or more of removing outlier bins based on the analysis of the histogram data, determining the scaling for a desired bit width, applying sparsity analysis to further reduce bit width, and choosing a rounding mode.

Exemplary rules include:

C1: Exponent selection based on the dynamic range of histogram data.
C1A) Remove outlier bins according to inclusion threshold ($Th_{inclusion}$)

Let $N_i$ be the number of values in $bin_i$ of histogram data Step 1: If $\frac{N_i}{N_{i-1}} < Th_{inclusion}$, skip bin, else return index $i$ Repeat Step 1 from max bin to min bin for all $i$'s.

This algorithm returns $bin_{trunc_i}$ as the max bin after outlier bins are truncated.

An exemplary $Th_{inclusion} = 0.0001$

C1B) fixed point scaling exponent with desired bit width, e.g., 8-bit, is chosen with representable maximum and minimum representable value of the $bin_{trunc_i}$ as in step 1. These values are defined as $maxval_{trunc_i}$ and $minval_{trunc_i}$ respectively.

C2: During validation, all values that fall outside of [$minval_{trunc_i}$, $maxval_{trunc_i}$] are clipped to the $minval_{trunc_i}$ and $maxval_{trunc_i}$ values respectively.

C3: Upon applying (C1A, C1B), if the instrumented histogram data of a layer can be fit into input word length (WL) that satisfies the threshold % $Th_{quantization}$, the layer is quantized with word length (WL), e.g., 8-bits. Otherwise, the layer is excluded from quantization.

Example $Th_{quantization}$ = 97%

C4: Sparsity analysis using number of zero occurrences and C1

Instrumentation data indicates how many values were zeros across all values observed at an instrumentation point. If this proportion is high and/or exceeds a threshold, the instrumentation point is quantized to a lower bit width / pruned out of the network.

Once a fixed point scaling exponent is chosen from C1, analysis of the histogram data may also indicate how many bins are going to underflow to zero. This results in additional value sparsity.

C5: Applying C1, C3 at tensor level or channel level quantization. Some operations in a layer may remain in floating point without quantization.

The above rules are layer fusion agnostic techniques that may operate at a layer layer.

C6: Performance-based layer fusion optimization with information from C1 and C4. For example, batch normalization can improve the inference speed, but it may lead to sparsification of network

Rule C6 employs further inference speed related optimizations and may introduce another factor of sparsity in the network.

C7: Choosing rounding mode based on the nature of histogram bin data and hardware implementation. - CPUs and GPUs can use stochastic rounding while FPGAs may have a precomputed step. Other rounding modes include round away from zero, which may be used with ARM targets, and rounding to nearest even integer for CUDA targets. In some embodiments, the quantization options may involve indicating which quantization rules the quantization system 300 is to apply to the DNN or application, changing the manner in which one or more quantization rules are performed by the quantization system 300, excluding one or more layers of a DNN from quantization, setting and locking a data type for one or more layers of a DNN, setting an allowable accuracy loss threshold, or setting a validation pass criteria, among others.

Returning to Fig. 4A, the quantization system's instrumentation engine 302 may instrument the application at a plurality of instrumentation points, as indicated at step 412. For example, the instrumentation engine 302 may instrument the DNN or application at the points identified for quantization, for example, through the UI 900. In some embodiments, the instrumentation engine 302 may automatically select one or more points for instrumentation in a DNN or application either in addition to user selection or alternatively to user selection. For example, the instrumentation engine 302 may establish default instrumentation points at the boundaries of layers of the DNN, layers designated to have a reduced bit width, e.g., INT8 implementation, relative to the original bit width of the layer, layers to be implemented using CUDA or C++ implementations, or layers that call INT8 APIs in hardware accelerated libraries, such as cuDNN or ARM compute library. In cases where layers are fused or combined, the instrumentation engine 302 may establish default instrumentation points at the boundary of the fused layers. The instrumentation engine 302 may identify compute intensive portions of the selected application and automatically instrument such compute intensive portions. Exemplary compute intensive (or resource hungry) portions include convolution, softmax, activation, e.g., sigmoid, and fully connected layers of a DNN, and matrix multiplication operations, among others. The instrumentation engine 302 also may utilize static analysis of the DNN to determine instrumentation points. The instrumentation engine 302 may determine the instrument points within a layer based on the characteristics of the target hardware and/or the hardware acceleration library used by the layer. For example, for an FPGA, a DSP slice may specify the bit width for the accumulator, and the instrumentation engine 302 may set an instrumentation point at the operation to be performed by the accumulator. The instrumentation engine 302 may also insert instrumentation hooks at the boundary of the pre-processing code and the DNN for determining min/max ranges.

In some embodiments, the compiler 210 may lower operations of a DNN to basic operations, such as addition. The instrumentation engine 302 may insert instrumentation points at these addition or other lowered operations.

Additionally or alternatively, the instrumentation engine 302 may instrument portions of the application based on the availability of one or more APIs and/or hardware acceleration libraries for the selected target hardware. For example, NVIDIA's cuDNN library, which can be used with NVIDIA GPUs, supports convolution, pooling, normalization, and activation layers. In response to a user selecting an NVIDIA GPU, the instrumentation engine 302 may instrument one or more of the convolution, pooling, normalization, and activation layers of a DNN included in the application. ARM's Compute Library, which can be used with ARM's CPUs or ARM's Mali family of GPUs, supports convolution, fully connected, activation, normalization, pooling, and softmax layers. In response to a user selecting an ARM Mali GPU, the instrumentation engine 302 may instrument one or more of the convolution, fully connected, activation, normalization, pooling, and softmax layers. Intel's DNNL, which can be used with Intel CPUs and GPUs, supports convolution, matrix multiplication, batch normalization, pooling, and softmax, among others. In response to a user selecting an Intel CPU or GPU, the instrumentation engine 302 may instrument one or more of the convolution, matrix multiplication, batch normalization, pooling, and softmax layers.

For FPGA execution environments, internal accumulators and matrix multiplication of convolution operations can be instrumented. For local response normalization (LRN) layers, instrumentation may be used to obtain inter-channel and intra-channel ranges, and the instrumentation information utilized to precompute the quantization of normalization factors per channel or channel pair. For batch normalization, instrumentation may be performed to observe the statistics per mini-batch so that the scaling factors per batch can be introduced during quantization. Also, the scale and shift done in batch normalization can result in different choices of data types that can accommodate for higher precision.

Tensor-level and channel-level instrumentation may be performed, e.g., for choosing quantization factors at a finer level of granularity. For example, to the extent a data value being instrumented has multiple dimensions, the instrumentation engine 302 may instrument each dimension of the data value. For example, input data, such as image data, may have three channels, e.g., Red, Blue and Green channels. In addition, some data values may have multiple tensors and each tensor may have multiple channels. For example, a convolution layer may have or compute two tensors one for input and one for weights in NCHW format, where

N - batch size,
C - number of channels,
H - height, and
W - width.

Instrumentation may be done per batch and/or per channel for both input and weights.

In some embodiments, an application can be instrumented at additional points beyond those that may be quantized. For example, even though a particular layer of a DNN may not be quantizable, the instrumentation engine 302 may still instrument that layer so that statistics on the layer's data values may be derived and presented, e.g., to a user.

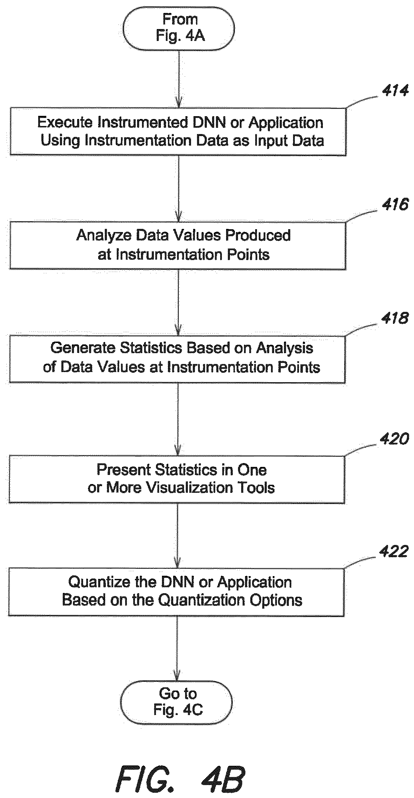

The instrumentation engine 302 may also direct the program execution engine 206 to run the instrumented DNN or application utilizing the instrumentation data, as indicated at block 414 (Fig. 4B). During execution, the application computes values for the data associated with the instrumentation points. For example, outputs are computed by the layers of the DNN, intermediate values are computed, such as values produced by accumulators, and network parameters, such as weights and biases, are accessed. The statistics generator 304 may analyze the data values produced at the instrumentation points, as indicated at block 416. The statistics generator 304 may generate statistics and/or attributes, e.g., calibration statistics, based on the computed data values being analyzed, as indicated at block 418. For example, the statistics generator 304 may perform range analysis on the data values and determine the minimum and maximum data values computed during execution of the application. The statistics generator 304 may also determine the number of times that the data value was zero and also whether the data value was always zero.

In addition, the statistics generator 304 may assign each data value computed at an instrumentation point and converted to binary (base 2) to a respective range bin and a respective precision bin. Each bin may represent a different power of two, e.g., $2^{-3}$, $2^{-2}$, $2^{-1}$, $2^{0}$, $2^{1}$, $2^{2}$, for example. The statistics generator 304 may assign a data value to a range bin based on the most significant bit used to represent the data value in binary (base 2) format. The statistics generator 304 may assign a data value to a precision bin based on the smallest power of two for representing the fractional portion of the data value in binary (base 2) format. Consider, for example, the base 10 data value 17.125. Converting 17.125 to binary (base 2) gives 10001.001, e.g., $1 \times 2^{4} + 0 \times 2^{3} + 0 \times 2^{2} + 0 \times 2^{1} + 1 \times 2^{0} + 0 \times 2^{-1} + 0 \times 2^{-2} + 1 \times 2^{-3}$. The statistics generator 304 may consider the data value 17.125 as one occurrence of range bin $2^{4}$, i.e., 16, and one occurrence of precision bin $2^{-3}$, i.e., 0.125.

In some embodiments, precision bins may log all the power of 2 bins used when a value is fractional. For example, consider the fraction only part of pi is 0.141592653589793... The MSB of this value is $2^{-3}$, while its bit pattern also uses other negative power of two bins. Logging precision bits required for all the values can be used to understand how many precision bins may be needed for convolution accumulators.

The visualization tool generator 306 may present a visual display of at least some of the generated statistics and/or attributes, for example through one or more visualization tools, as indicated at block 420.

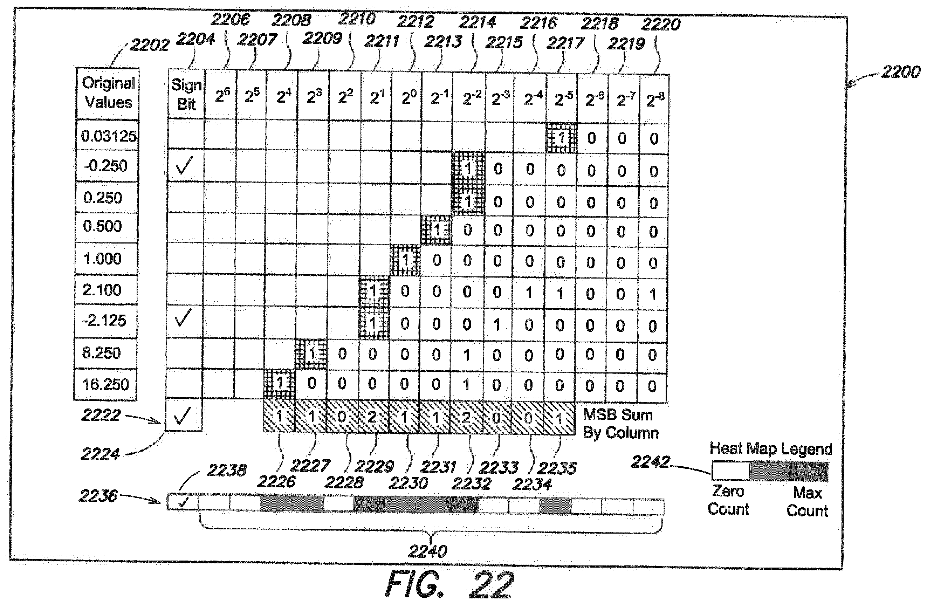

Fig. 22 is an illustration 2200 of an example process for assigning data values observed at an instrumentation point to power of two bins and generating a user interface in accordance with one or more embodiments. The illustration 2200 includes a column 2202 of values, e.g., original values, in base 10 observed at an instrumentation point. The illustration 2200 further includes a sign bit column 2204 and a series of columns 2206-2220 representing power of two bins. The power of two bins 2206-2220 range from $2^{6}$ at column 2206 to $2^{-8}$ at column 2220. The power of two bins 2206-2220 provide a binary word representation of the original values in the column 2202. For each original value from the column 2202, the power of two bin storing the most significant bit (MSB) of the binary word representation, e.g., the left-most bit of the binary word, may be highlighted, e.g., in yellow, as indicated by the lining pattern. For example, for original values 2.100 and -2.125, the MSB is $2^1$. For the original value -2.125, the corresponding entry of the sign bit column 2204 is also checked. The illustration 2200 also includes a sum row 2222. The sum row 2222 include an entry 2224 for the sign bit column 2202, which may be checked if any of the original values is negative, thus indicating a sign bit is required for the binary word representation of the original values. Because two of the original values are negative numbers, the box 2222 is checked. The sum row 2222 also includes entries 2226-2335 indicating how many times the power of two bins was the MSB for the original values. The entries 2226-2235 may be highlighted, e.g., in green, as indicated by the lining pattern.

The visualization tool creator 306 may generate a heat map 2336 based on the information from the sum row 2222. The heat map 2236 may include an entry 2238 for the sign bit entry 2224 and entries indicated generally at 2240 for the power of two bins 2206-2220 that may be color coded to indicate how many times the power of two bins was the MSB for the original value. That is, visualization tool may convert the count information from the sum row 2222 into a color coded heat map. As indicated by a legend 2242, a power of two bin that is color coded in white indicates that the power of two bin had a zero count of being the MSB for the original values. A power of two bin that is color coded in light blue indicates that the power of two bin had a low count, e.g., 1, of being the MSB for the original values. A power of two bin that is color coded in dark blue indicates that the power of two bin had a high count, e.g., 2, of being the MSB for the original values. By viewing the heat map 2236, a user can quickly comprehend which of the power two bins was never the MSB, which power of two bins were occasionally the MSB, and which were frequently the MSB. It should be understood that other colors may be used in the shading for the heat map 2236.

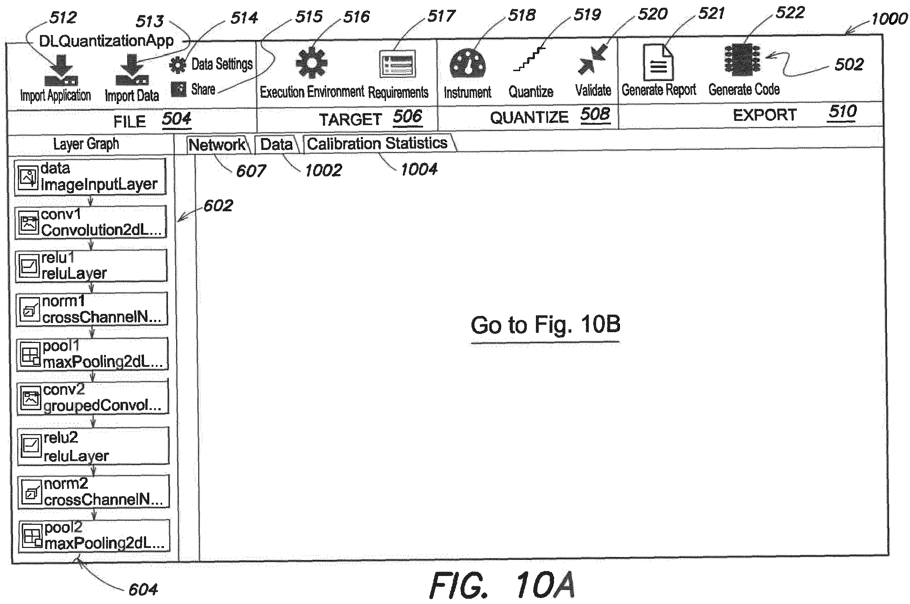

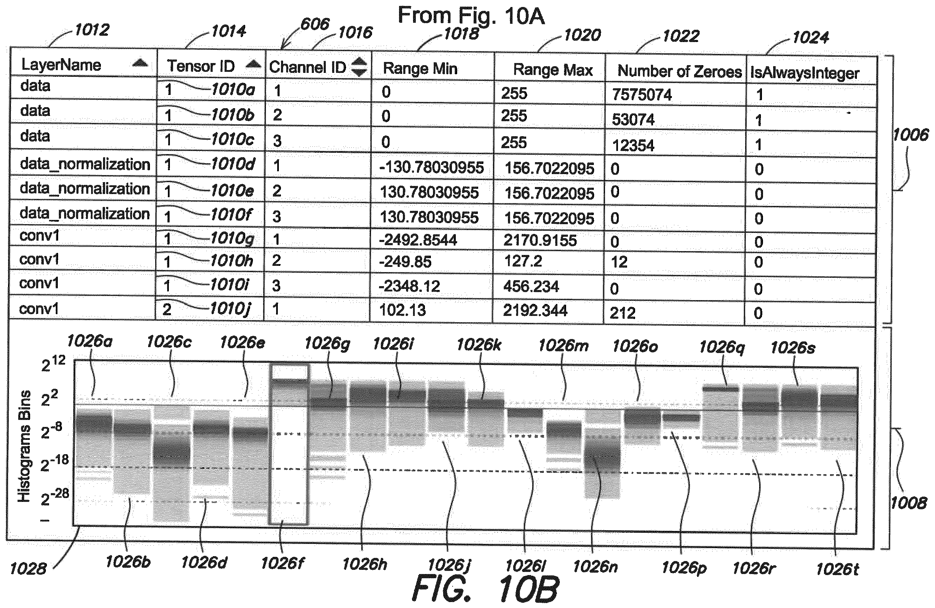

Figs. 10A and 10B are partial views of a schematic illustration of an example User Interface (UI) 1000 for presenting statistics and/or attributes derived for an application based on the instrumentation data in accordance with one or more embodiments. The UI 1000 may include the toolstrip 502 with the command buttons 512-522. The UI 1000 may also include the graph view 602 of the application or DNN to be quantized. In addition to the Network tab 607, the UI 1000 may include tabs 1002 and 1004 labeled Data and Calibration Statistics, respectively. The main pane 606 may be opened to the Calibration Statistics tab 1004 and may present statistics on data values produced at the instrumentation points. In some embodiments, the statistics view may include data views, such as a spreadsheet view 1006 and a heat map histogram view 1008. The spreadsheet view 1006 may include rows corresponding to instrumentation points, such as rows 1010a-j. The spreadsheet view 1006 also may include columns, such as a Layer Name column 1012, a Tensor Identification (ID) column 1014, a Channel Identification (ID) column 1016, a Range Minimum (Min) column 1018, a Range Maximum (Max) column 1020, a Number of Zeros column 1022, and an Is Always Integer column 1024. Rows 1010a-c may correspond to different channels of a data input layer. Rows 1010d-1010f may correspond to different channels of a data normalization process. Rows 1010g-1010j may correspond to different channels and different tensors of a first convolution layer (conv1) of the DNN

The heat map histogram view 1008 may present a plot of the range bin and precision bin information derived by the statistics generator 304 for data values computed and/or observed at the instrumentation points. As described, the statistics generator 304 may assign or place each data value generated at an instrumentation point in a power-of-two range bin and a power-of-two precision bin. The histogram view 1008 may include summary histogram heat map elements 1026a-t that present both the range information and the precision information for the instrumentation points. That is, the heat map histogram view 1008 may include a summary heat map histogram element 1026 for each row presented in the spreadsheet view 1006. The elements 1026 may be generated as described in connection with Fig. 22 where white indicates power of two bins having a zero count of being the MSB for the original values, light blue indicates power of two bins having a low count of being the MSB for the original values, and darker blue indicates power of two bins having a high count of being the MSB for the original values. The summary heat map histogram elements 1026 may be plotted relative to a histogram bins axis 1028 that indicates the powers-of-two bins to which data values are assigned. As illustrated, the number of occurrences for a given power-of-two bin may be represented in the summary histogram elements 1026 through a graphical affordance, such as color coding, shading, etc. It should be understood that a wide range of color, e.g., blue, shading may be used. For example, the darker the shading of a portion of a summary histogram element 1026 the higher the number of occurrences at the respective bin while the lighter the shading the fewer the occurrences at the respective bin. It should be understood that other graphical affordances may be used.

Consider summary histogram element 1026b, for example, which may correspond to the data values for channel two of the input data layer, e.g., row 1010b of the spreadsheet view 1006. The summary histogram element 1026b indicates that the range reached approximately $2^2$, while the precision reached approximately $2^{-28}$. Nonetheless, as indicated by the dark shading portion, a large number of occurrences of the data values had a range of approximately $2^0$.

The histograms may present a view of layer activity data in the form of dynamic range visualization that may be used to understand the potential quantization effects, for example when the layer is quantized to an 8-bit integer data type. Quantization effects may include out of range, overflow, etc.

In some embodiments, the visualization tool creator 306 may also present detailed histogram information for one or more instrumentation points. For example, in response to a selection, e.g., by a user, of a given summary histogram element 1026, the visualization tool creator 306 may direct the UI engine 202 to present a detailed histogram view for an instrumentation point corresponding to a given summary histogram element 1026.

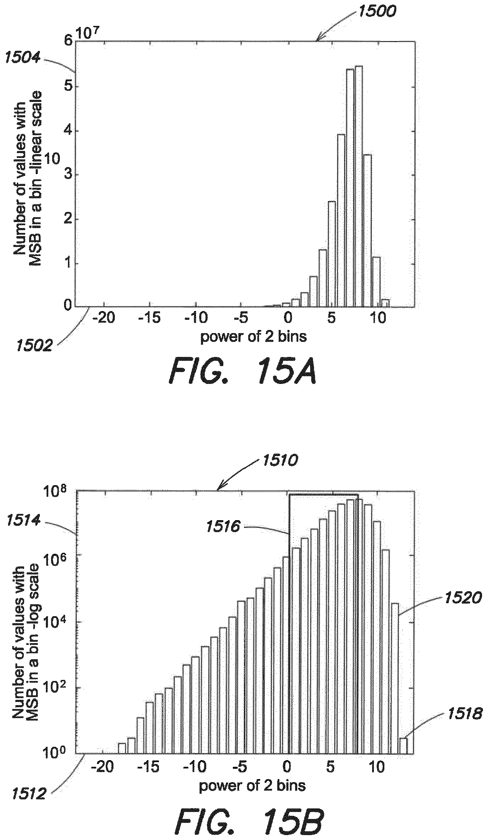

Fig. 15A is a schematic illustration of an example detailed histogram view 1500 in accordance with one or more embodiments. The detailed histogram view 1500 may include an x-axis 1502 that indicates the range histogram information for the data values in power of 2 bins. The detailed histogram view 1500 also includes a y-axis 1504 that indicates the number of occurrences of the data values for the power of 2 bins.

Fig. 15B is a schematic illustration of an example detailed histogram view 1510 that includes an x-axis 1512 that indicates the range histogram information for the data values in power of 2 bins. The detailed histogram view 1510 also includes a y-axis 1514 that indicates the number of occurrences of the data values for the power of 2 bins. The detailed histogram view 1510 is similar to 1500 except that the y-axis 1514 is a log scale. Presenting histogram statistics in log scale may help a user visualize bins that have few values. In some embodiments, the visualization tool creator 306 may include a bounding box 1516 in the histogram view 1510. The bounding box 1516 may represent the proposed bit-width. A user may manually control the width of the bounding box 1516, for example to include or exclude particular bins, which may help the user in choosing a custom bit-width for quantizing the layer represented by the detailed histogram view.

Analyzing Fig. 15B reveals that, in this example, there are few occurrences of the data value appearing in bin 13 indicated at 1518 as compared to bin 12 indicated at 1520. Accordingly, if the selected data type results in values occurring in bin 13 being saturated, few potential quantization error will be introduced for the instrumentation point.

Returning to Fig. 4B, the data type converter 308 may quantize the DNN or application, as indicated at block 422. The quantization system 300 may quantize the application or DNN in response to user input, such as user selection of the Quantize command button 519. Quantization may involve determining proposed data types for existing data types, e.g., single precision floating point data type, utilized by the application 102. Quantization may also involve determining a scaling factor. The scaling factor may be determined based on the dynamic range of values at the respective instrumentation point. Quantization may be performed for at least some of the instrumentation points. The instrumentation points may thus be considered to be a superset of quantization points.

The quantization of the DNN or application may be performed as part of code generation. The code generator 212, moreover, may include a plurality of components, such as a front-end unit, an Intermediate Representation (IR) generator, and a back-end unit. The front-end unit may perform type checking and lexical analysis of the DNN or application, among other preliminary tasks. The IR generator may translate the DNN or application into one or more static Intermediate Representations (IRs) that may be source and target language independent, such that operations and data contained within such IRs are not specific to the programming language in which the DNN or application was written. That is, the front-end unit and/or the IR generator may translate programs written in a variety of programming languages into the one or more IRs.

The one or more IRs may be graph-based, object-oriented structures. For example, the IRs may be in the form of a hierarchical Data Flow Graph (DFG) and/or a Parallel Intermediate Representation (PIR), which may include a plurality of IR objects, such as nodes, which may represent operators of the DNN or application, interconnected by edges, which may represent data flow. The nodes of the PIR may present components corresponding to portions of the DNN or application, such as functions and/or operations, and the edges may represent data and/or control flow.

The IRs and/or one more nodes of the IRs may be implemented as a syntax tree, Abstract Syntax Tree (AST), Direct Acyclic Graph (DAG), Control Flow Graph (CFG), Control Data Flow Graph (CDFG), program structure tree (PST), etc., or combinations thereof. A CDFG may capture the control flow as well as the data flow of a DNN or application through data dependency and control dependency edges. One or more of the IRs may be referred to as a Code Generation Intermediate Representation (CGIR). The CGIR, like the PIR, may include nodes that may represent blocks of program statements and edges that may represent control flow. The IRs may be stored in memory, such as a main memory or a persistent memory of a data processing device. Starting with an initial IR for the DNN or application, the IR generator may apply transforms, optimizations, or other compilation operations, thereby creating a series of IRs.

The quantization engine 301 may analyze the PIR to determine the structure of the DNN and determine which layers to quantize. The determination of which layers to quantize may be based on factors such as position of the layer in the DNN, such as whether it is an early or later layer in the DNN that can have different impact on the DNN's accuracy. The quantization engine 301 also may determine whether to quantize a layer based on whether the layer can be fused with successive layers/operations, and accordingly choose a quantization implementation for the fused layers. The quantization engine 301 also may run other structural analyses to check if a layer is followed by other quantizable layers to avoid redundant conversions between floating point data types to integer data types, or whether quantizing a layer would require a costly data layout conversion. Once the data type converter 308 chooses a data type for a layer based on these analyses, the quantization engine 301 may annotate the static PIR graph or any of the other representations that are used in the IR with datatype information for each layer of the DNN as represented in the PIR graph. The visualization tool creator 306 may access information from the static PIR graph, such as the datatype information, to present one or more UIs or other visualizations. The back-end component of the code generator 212 may translate, e.g., lower, the static PIR graph to a form for generating code for the selected target hardware, e.g., C code and/or CUDA code.

In some embodiments, the data type converter 308 may apply the selected or determined rules and the quantization of the DNN or application may be based on the derived statistics and/or attributes and one or more of the options specified for the quantization process, including whether to quantize on a channel vs. tensor level. The data type converter 308 may determine whether the instrumented data values may be converted to the allowable data types, such as 8-bit integer (int8). In the histogram bins, after choosing data types, if there is a significant number of values that will underflow, then the instrumentation point may be skipped from being quantized. Furthermore, the data type converter 308 may exclude a layer of the DNN from being quantized if the range of data values as determined through instrumentation reveals significant overflow or underflow for the chosen datatype. Layers that implement functions such as tanh and exp also may be excluded from quantization because they can be sensitive to quantization loss. The data type converter 308 also may exclude custom defined layers, output layers, and layers whose outputs are tapped out by activation calls.

Also, INT8 APIs in cuDNN require a certain data layout for operating in INT8. For instance, a layout of NC/4HWx4 (packed format) is needed for INT8 convolution operation. This packed format incurs a performance cost due to layout transforms. The data type converter 308 may try to reduce this cost, for example by preserving the floating point format. This may occur if the output of a layer is queried by user or if the output of a layer goes to a subsequent layer such as tanh or exp that have non-trivial quantized implementations.

In some embodiments, the data type converter 308 may apply arbitrary bit-width quantization to the data values for one or more of the instrumentation points. For example, the data type converter 308 may convert the existing data type, e.g., double, to dynamic fixed point data type. Arbitrary bit-width representation may refer to a non-built-in bit-width, such as, with reference to the MATLAB language, non-8, non-16, and non-23 stored integer representation and their corresponding fixed point scaling.

A value of a fixed-point data type is an integer scaled by a specific scaling factor that may be determined by the data type. For example, the value 1.23 may be represented as 1230 in a fixed-point data type with scaling factor of 1/1000, and the value 1,230,000 may be represented as 1230 with a scaling factor of 1000. Unlike floating-point data types, the scaling factor is the same for all values of the same fixed-point data type, and does not change during the computation. Scaling factors are often a power of 10 or a power of 2, although other scaling factors may be used. The maximum value representable by a fixed-point type is simply the largest value that can be represented in the underlying integer type multiplied by the scaling factor.

Some programming languages may define their own fixed-point data types and/or scaling techniques. For example, the MATLAB language defines a fixed point data type that is represented as:

fixdt(Signed, WordLength, FractionLength), where

'Signed' specifies whether the fixed point data type is signed (0) or unsigned (1),
'WordLength' specifies the word length of the fixed point data type in bits, e.g., 8 bits, 16-bits, 32-bits, etc., and
'FractionLength' specifies the fraction length of the fixed point data type in bits, e.g., 1, 2, 3, etc.

For slope-bias scaling, a fixed point data type may be represented as:
fixdt(Signed, WordLength, FractionLength, Slope, Bias), where
'Slope' and 'Bias' specify values for slope-bias scaling.

With slope-bias scaling, a real-world value may be encoded according to the scheme:

$$V = SQ + B$$

where

V is the real-world value being encoded,
S is the slope,
Q is an integer (also referred to as the stored integer or quantization value) that encodes V with the binary point assumed to be at the far right of the word length, and
B is the bias.

In some examples, the slope may be represented as

$$S = F2^E,$$

where

F is a slope adjustment factor, such that $1 \leq F < 2$, and

$2^E$ specifies the binary point, and E is the fixed power-of-two exponent.

In some implementations, S and B are constants that are not stored in the hardware directly. Only the quantization value is stored in memory.

For binary-point-only scaling, F = 1 and B = 0. Thus, the general equation becomes

$$V = Q2^E$$

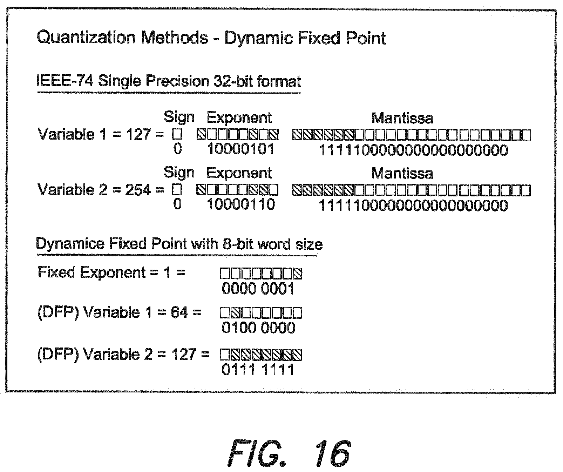

Fig. 16 is a schematic illustration of an example for choosing a dynamic fixed point data type to include two variables, variable 1 and variable 2, having values of 64 and 127, respectively. To represent these values, two different scaling factors will be selected, both with 8-bit word length. The stored integers of 8-bit width may be re-interpreted into the original value given the dynamically associated scaling factor, or exponent.

The quantization system 300 may also apply one or more optimizations. For example, the quantization system 300 may apply a layer fusion optimization in which two or more layers of a DNN are fused into a single layer, e.g., for computation by a hardware acceleration library. Exemplary layers that may be fused include conv and batch-norm as well as conv and reLu. Other optimizations may include reducing and/or eliminating rescaling operations and using integers only when performing a forward pass when all layers can accept INT8 data type, for example.

Rescaling operations may be included when performing operations on values represented by fixed-point data types. For example, when adding or subtracting two values of the same fixed-point data type, the underlying integers may be added or subtracted and their common scaling factor used for the result, which may be exactly represented in the same type, as long as no overflow occurs, i.e. provided that the sum of the two integers fits in the underlying integer data type. If the values being added or subtracted have different fixed-point data types, with different scaling factors, then one of them must be converted to the other data type before the sum. When multiplying two fixed-point data type numbers, the two underlying integers may be multiplied and the scaling factor of the result is the product of the scaling factors of the two numbers. If the two operands have the same fixed-point data type, and the result is also to be represented in that type, then the product of the two integers must be explicitly multiplied by the common scaling factor. In this case, the result may have to be rounded, and overflow may occur. To divide two fixed-point numbers, the integer quotient of the underlying integers may be determined, and the scaling factor may be the quotient of their scaling factors. If both operands and the desired result all have the same scaling factor, then the quotient of the two integers must be explicitly multiplied by that common scaling factor.

Quantization of a DNN or application may not change the structure of the application. For example, quantization may not change the types of layers or the sequence of layers of the DNNs included in the application.

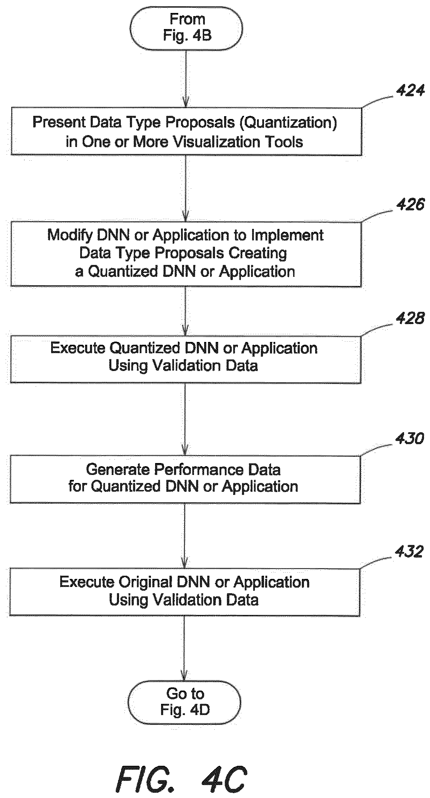

The visualization tool creator 306 may present the results of the quantization of the DNN or application in one or more visualization tools, as indicated at block 424 (Fig. 4C).

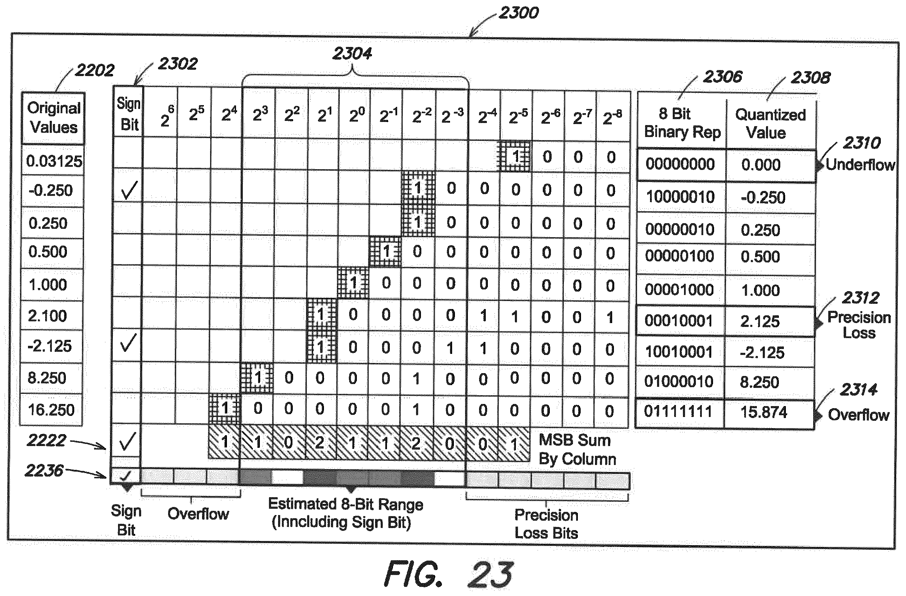

Fig. 23 is an illustration 2300 of an example process for quantizing an instrumentation point in accordance with one or more embodiments. The illustration 2300 continues with the example illustration 2200 presented in Fig. 22. In some embodiments, the data type converter 308 may assign a data type to the instrumentation point that can represent the bit locations that capture the most information. For example, suppose the data type converter 308 assigns an 8-bit data type to the instrumentation point. Because the original values include negative values, the data type converter 308 may include a sign bit indicated at a bounding box 2302 in the 8-bit data type. The data type converter 308 may select the 7-bit bit range that represents bits from $2^3$ to $2^{-3}$ as capturing the most information, e.g., in terms of range and precision, from the original values, as indicated at a bounding box 2304. The illustration 2300 may further include a column 2308 with the 8-bit binary representation of the original values corresponding to the selected data type, and another column with the quantized value in base 10 for the original value.

Original values whose MSB is below the selected 7-bit range, such as original value 0.03125 whose MSB is at power of two bin $2^{-5}$, may result in underflow, such that the original value (0.03125) as quantized become 0, as indicated at 2310. Original values whose MSB is within the 7-bit range but whose other bit position(s) are outside of the range, such as original value 2.100, may suffer a loss of precision, as indicated at 2312. More specifically, original value 2.100 becomes 2.125 after quantization. Original values whose MSB is above the selected 7-bit range, such as original value 16.250 whose MSB is at power two bin $2^4$, may result in overflow, such that the original value (16.250) saturates to the largest representable value of the data type, e.g., 15.874, as indicated at 2314.

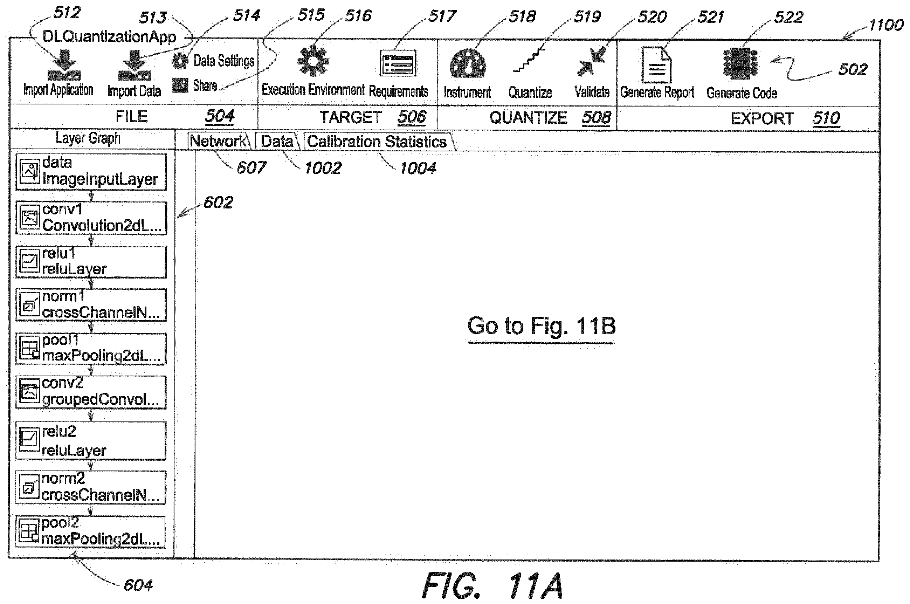

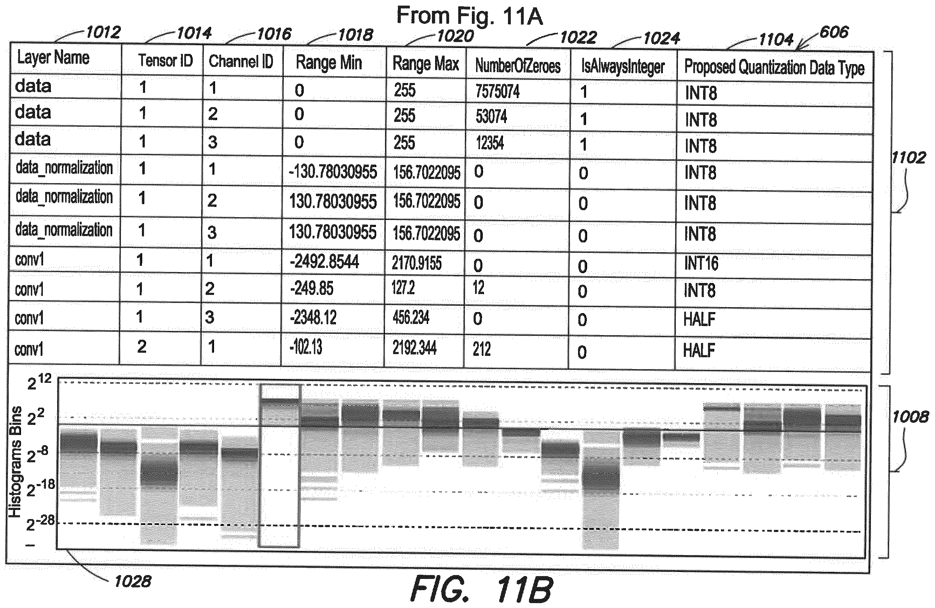

Figs. 11A and 11B are partial views of a schematic illustration of an example User Interface (UI) 1100 for presenting quantization proposals for an application in accordance with one or more embodiments. The UI 1100 may include a spreadsheet view 1102 that includes a Proposed Quantization Data Type column 1104.

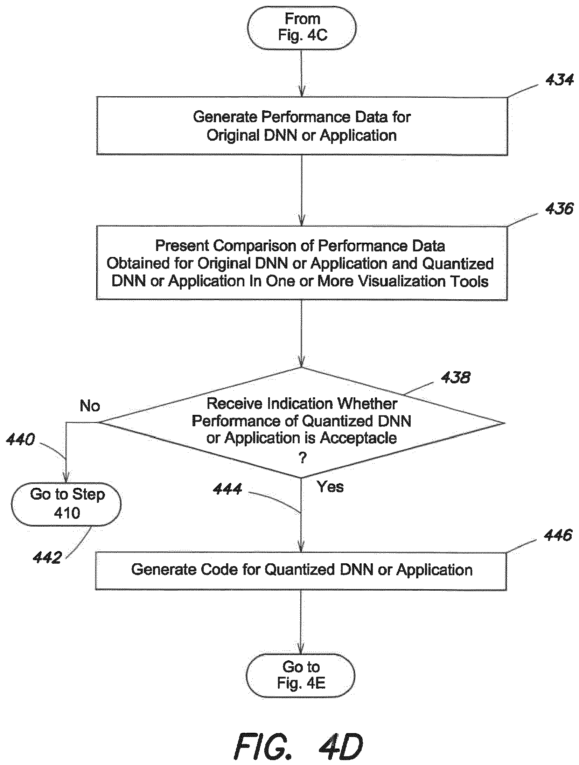

Returning to Fig. 4C, the program editor 204 may modify the DNN or application by changing data types originally utilized, e.g., after training and before quantization, by the DNN or application, e.g., double, to the data types proposed by the quantization system 300, e.g., int8 and half, thereby producing a quantized DNN or application, as indicated at block 426. The validation engine 310 of the quantization system 300 may direct the program execution engine 206 to run the quantized DNN or application using the validation data, as indicated at block 428. The quantized DNN or application may be run in simulation, e.g., on a workstation as opposed to the target hardware, or on target hardware, for example in a Hardware in the Loop (HIL) environment. The validation engine 310 may monitor the execution of the quantized DNN, e.g., quantized DNN 105' or 106', or the quantized application 102' and may generate performance data for the quantized application 102', as indicated at block 430. The validation engine 310 may also direct the program execution engine 206 to execute the original DNN 105 or 106 or the original application 102 again using the validation data, as indicated at block 432. The validation engine 310 may monitor the execution of the original application 102 and may generate performance data for the original application 102, as indicated at block 434 (Fig. 4D). The validation engine 310 may utilize the selected metric function(s). The visualization tool creator 306 may present the performance information for the quantized application 102' and for the original application 102, for example in one or more visualization tools, as indicated at block 436.

In some embodiments, the validation engine 310 may generate one or more test harnesses for validating the quantized application 102'. The test harness may include the validation data, elements implementing the performance metric functions being applied, and plotting or other display elements for presenting the results of the validation.

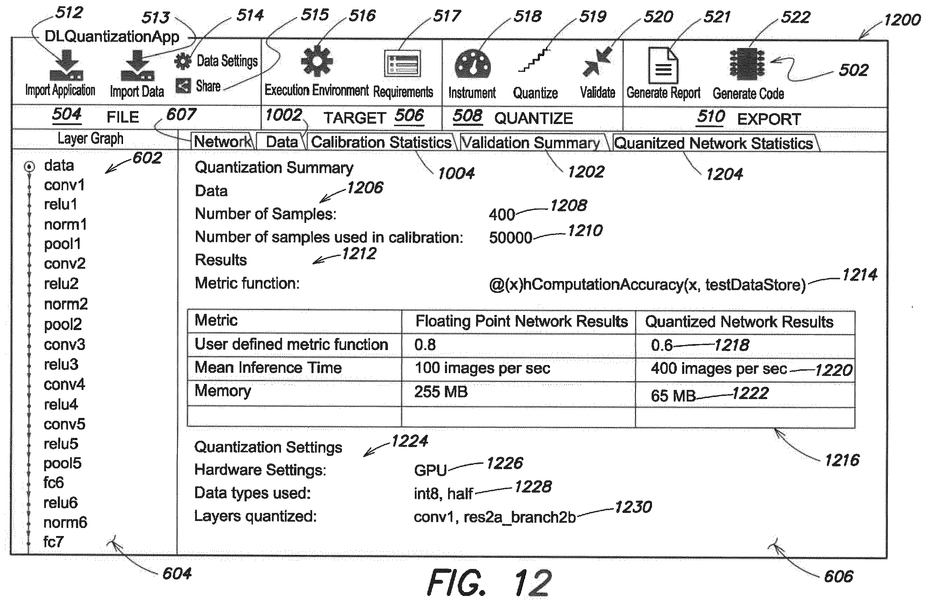

Fig. 12 is a schematic illustration of an example User Interface (UI) 1200 for presenting performance data for an original DNN or application and a quantized version of the DNN or application in accordance with one or more embodiments. The UI 1200 may include the toolstrip 502 with the command buttons 512-522. The UI 1200 may also include the graph view 602 of at least part of the application or DNN to be quantized. In addition to the Network tab 607, the Data tab 1002, and the Calibration Statistics tab 1004, the UI 1200 may include tabs 1202 and 1204 labeled Validation Summary and Quantized Network Statistics, respectively. For GPU target hardware, the performance information may include parameter memory reduction and inference accuracy. For FPGA target hardware, the performance information may include inference accuracy, images or frames classified per unit time, e.g., second, and area. In some embodiments, the performance information may also be presented in the UI 1200.

The main pane 606 may be opened to the Quantized Network Statistics tab 1204 and may present statistics on the quantized application 102'. The quantized network statistics view shown in the main pane 606 may include a data region 1206 that includes an entry 1208 presenting the number of input data samples in the validation data 134, e.g., 400, and another entry 1210 presenting the number of data samples in the instrumentation data 126, e.g., 50,000. The quantized network statistics view shown in the main pane 606 may further include a results region 1212 that includes an entry 1214 indicating the one or more metric functions used to produce the performance information for the quantized version of the application. The results region 1212 may also include a performance comparison block 1216. The block 1216 may include entries for performance metrics. For example, the block 1216 may include an entry 1218 that applied a user defined metric to the original application and the quantized application. The value of the user defined metric for the original application is 0.8 while the value for the quantized application is 0.6. The block 1216 may include another entry 1220 that presents mean inference time for the original application, i.e., 100 images per second (sec), and for the quantized application, i.e., 400 images per sec. The block 1216 also may include an entry 1222 that presents the memory utilization for the original application, i.e., 255 megabytes (MB), and for the quantized application, i.e., 65MB

The quantized network statistics view shown in the main pane 606 may further include a quantization settings region 1224 that includes a hardware setting entry 1226 indicating the selection of GPU as the target hardware. The quantization settings region 1224 may include another entry 1228 indicating that the data types used in the quantized version of the application are 8-bit integer (int8) and half precision floating point (half). The quantization settings region 1224 also may include an entry 1230 that identifies the portions of the application that were quantized, e.g., the first convolution layer (conv1), and the second convolution layer (res2a_branch2b).

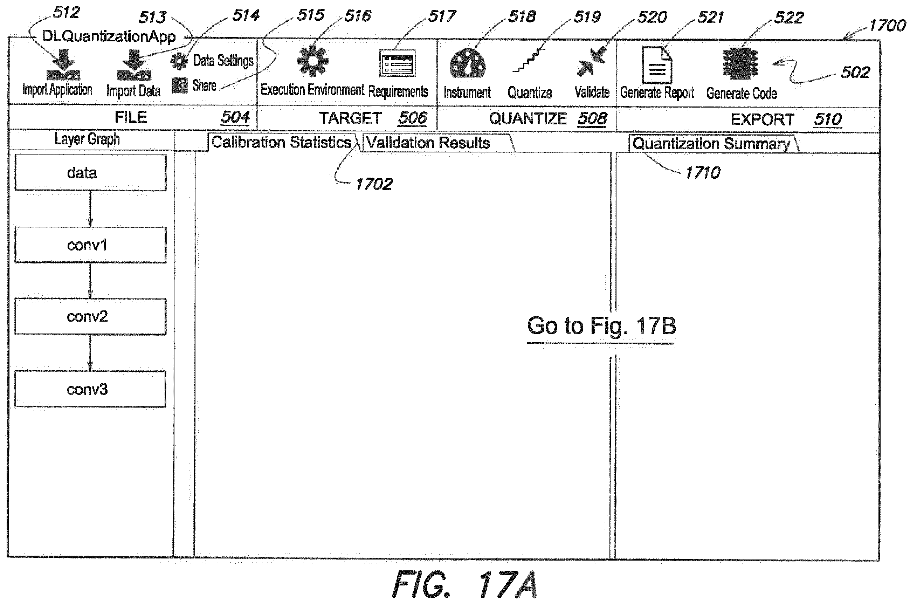

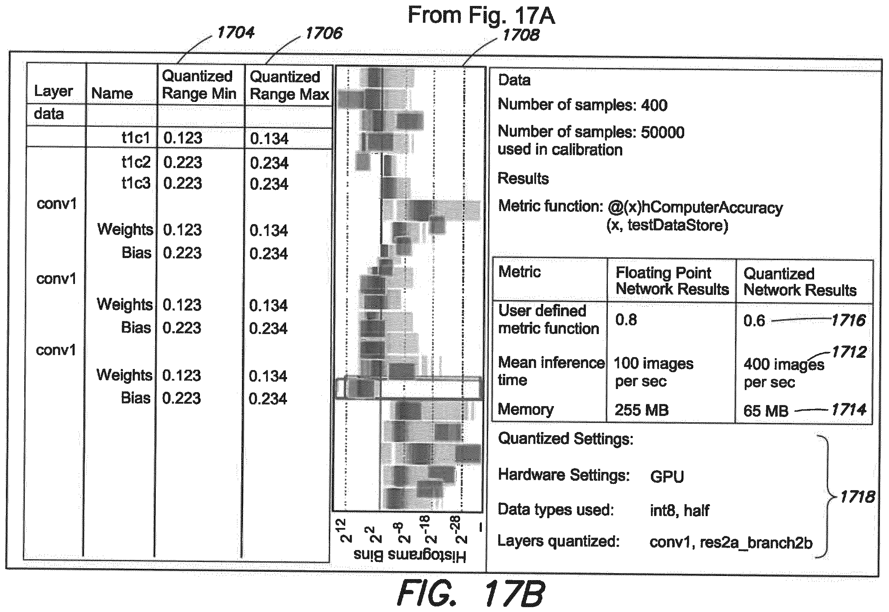

Figs. 17A and 17B are partial views of a schematic illustration of an example User Interface (UI) 1700 for presenting both statistics derived for a DNN or application based on the instrumentation data and performance data in accordance with one or more embodiments. For example, the UI 1700 includes a Calibration Statistics region 1702 that presents the quantized range, e.g., minimum (Min) and Maximum (Max) values for intermediate values (weights and biases) of a convolution layer (conv1) of a DNN for different channels of the convolution layer, as indicated at columns 1704 and 1706. The UI 1700 also includes a color heat map histogram view 1708, and a Quantization Summary view 1710. In the color heatmap, green is used to highlight the possible representable values based on the data type and the scaling factor. The Quantization Summary view 1710 includes a mean inference time entry 1712, which shows a marked improvement in inference time following quantization, e.g., 100 images classified per second (sec) before quantization and 400 images quantized per sec after quantization. Memory usage is also improved , e.g., from 255MB to 65MB, as indicated at entry 1714. Accuracy following quantization, however, is not as good as before quantization, as determined by the selected metric function, as indicated at entry 1716. The UI 1700 also includes a quantization settings view 1718, which presents the settings chosen for the quantization process, e.g., GPU as the target hardware, the data types used in quantization, e.g., int8 and half, and the particular layers of the DNN that were quantized, e.g., conv1 and res2a_brand2b.

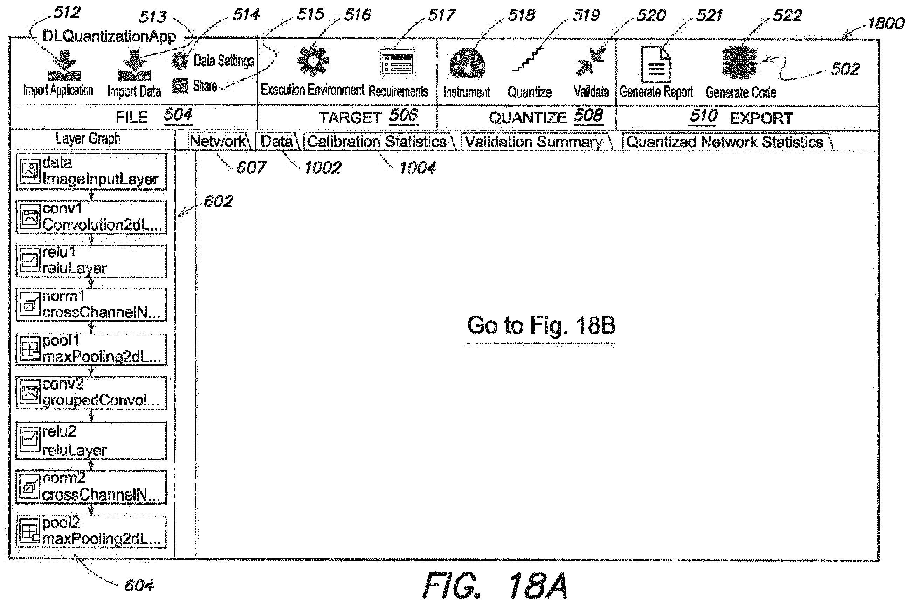

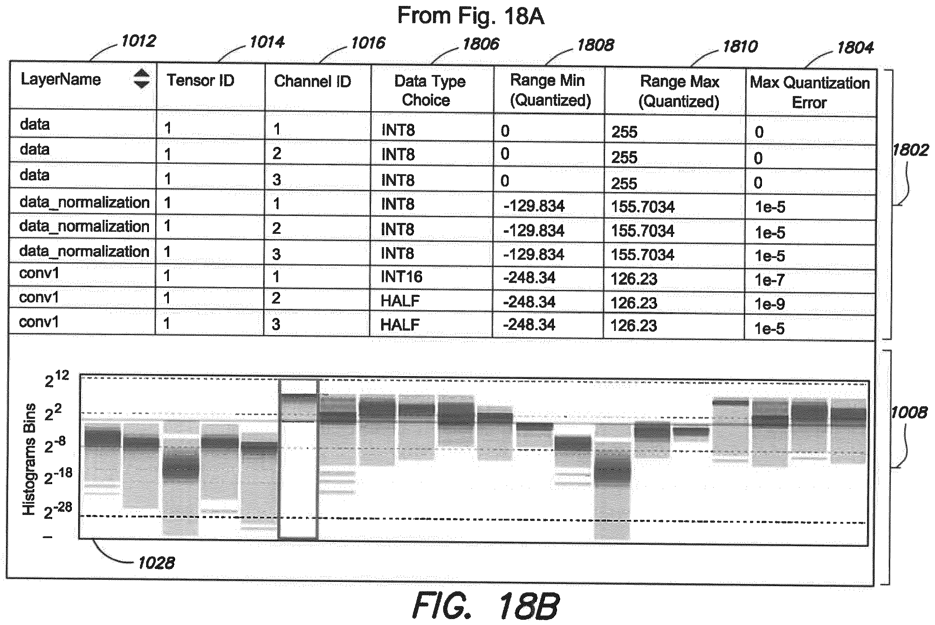

Figs. 18A and 18B are partial views of a schematic illustration of an example User Interface (UI) 1800 for presenting quantization information, including errors for each quantized layer determined for a plurality of instrumentation points in accordance with one or more embodiments. The UI 1800 may include a spreadsheet view 1802 that includes a Maximum (Max) Quantization Error column 1804. The validation engine 310 may determine Max Quantization Error values by computing a Mean Squared Error between values computed using the quantized data type representation and values computed with the original data type, e.g., single precision floating point. The spreadsheet view 1802 may further include a Data Type Choice column 1806, which may present how the data in the quantized application or network are stored and processed. The spreadsheet view 1802 also may include a Range Minimum (Min) Quantized column 1808 and a Range Maximum (Max) Quantized column 1810, which may present minimum and maximum values for the quantized application or network.

In some embodiments, a user may review the maximum quantization errors presented on the UI 1800 to determine whether quantization should be skipped for one or more layers of the DNN. For example, if the maximum quantization error for a given layer is greater than $1e^{-4}$ then the user may direct the quantization system 300 to skip the given layer.

In some embodiments, mean squared error for each quantized layer, as described above, may be described as histogram visualization. For example, single precision histograms for one or more layers may be overlaid onto quantized histograms to show how the original ranges were represented in the quantized form. In some embodiments, a display of the overall top-1/top-5 accuracy of the DNN in single precision versus the quantized DNN may be presented, where Top-1 accuracy refers to the ground truth matching the top prediction score of all the classes in the classification layer and Top-5 accuracy refers to the ground truth being one of the classes in the top 5 prediction score classes of the classification layer. In addition, the classification of one or more inputs, such as images, by the DNN with single precision data types versus classification of the one or more inputs by the DNN following quantization may be presented, for example using any of the top-1, top-5, precision, or recall, scores, described herein. It should be understood that accuracy may be presented in other ways.

A user may evaluate the performance data presented in the GUI 1200. In some embodiments, an indication may be received by the quantization system 300 whether the performance data for the quantized application is acceptable, as indicated at decision block 438. For example, suppose the user determines that the performance of the quantized application is not acceptable because the memory utilization, e.g., 65MB, while improved still exceeds available memory resources of the target hardware. Processing may return to block 410 (Fig. 4A), as indicated by No arrow 440 leading to Go To block 442. At block 410, one or more of the quantization options may be changed and the quantization process repeated. For example, through the command line interface, a user can change quantization options:

```
options = dlquantizationOptions;
options.MetricFcn = @(x)computeAccuracy(x, testDataStore);
options.SkipLayers = {'conv1', 'conv2'};
options.DataType = 'half'
```

Through the example UI 900, this can be achieved through UI drop down at "Quantize and Validate" step.

For manual quantization rule selection,

```
options.RoundingMode = {'stochastic rounding' }
options.HistogramInclusionThreshold = 85%
options.OutlierSelectionThreshold = 0.001
```

These options may also be provided in the UI 900 when the "manual" command is selected as the "quantization rule".

In this example, changing the rounding mode may avoid severe underflows to zero. Outlier selection refers to the number of bins that are considered as outliers from the histogram ranges. Changing outlier selection may result in more saturation at range end and less precision loss for the same values.

In response to the accuracy loss information or other information at layers/quantization points, the user can change quantization at selected layers/quantization points, for example by selecting a different quantization scheme supported by the target hardware.

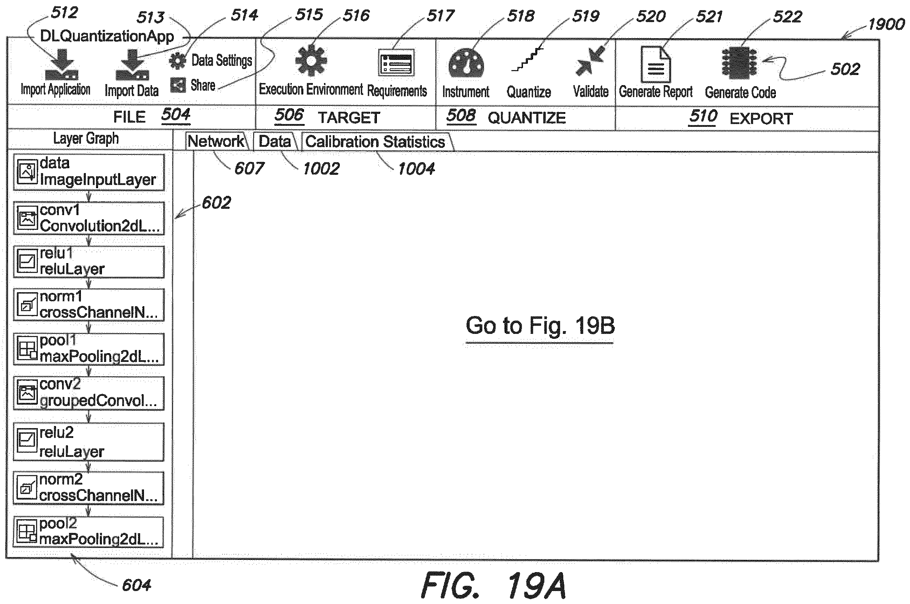

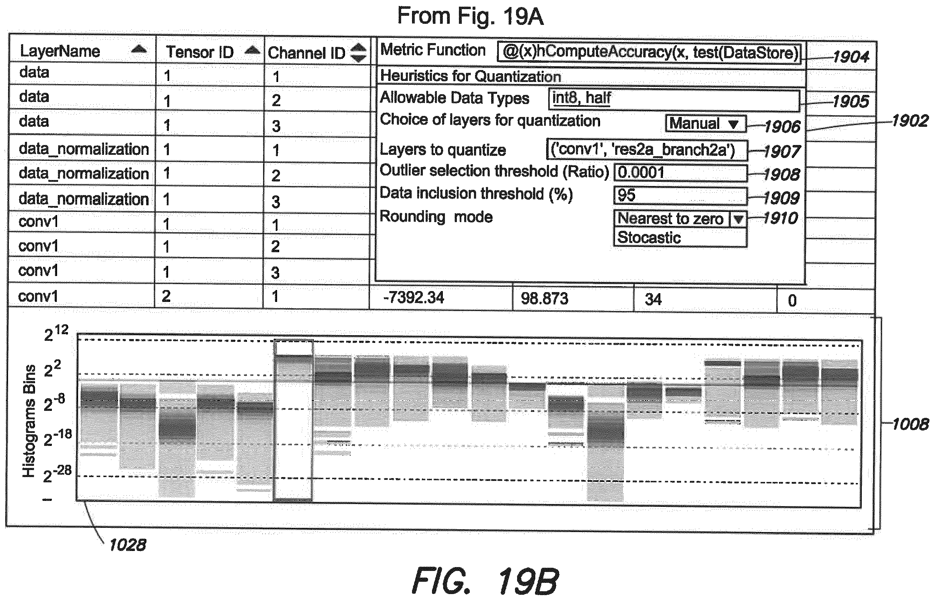

Figs. 19A and 19B are partial views of a schematic illustration of an example User Interface (UI) 1900 through which one or more quantization options may be changed in accordance with one or more embodiments. The UI 1900 may include a window 1902 for changing and/or modifying one or more quantization options. For example, the window 1902 may include data entry or other boxes 1904-1910 through which a user may change the metric function and one or more options for quantizing the application or network, including the allowable data types, whether manual or automatic selection of the layers to be quantized is to be performed, the particular layers to be quantized (if manual quantization is selected), the outlier selection threshold ratio, the data inclusion threshold, and the selected rounding mode. Box 1904 may present the metric function. Box 1905 may present the allowable data types. Box 1906 may be set to indicate the choice of layers is Manual. Box 1907 may indicate the particular layers to be quantized. Boxes 1908 and 1909 may indicate outlier and inclusion thresholds. Box 1910 may indicate the selected rounding model. The user may set the threshold % $Th_{quantization}$ used in rule C3, and the rounding mode described in connection with rule C7, among other options.

The histogram, entries of the graph view 602, and entries on the spreadsheet may be synchronized. For example, in response to user selection of a layer presented in the graph view 602, the UI engine 202 may present information corresponding to that layer in the histogram and the spreadsheet.

With the changes made to the quantization options, the process indicated by blocks 412-438 may be repeated. It should be understood that one or more of the blocks 412-438 may represent an iteration loop and a DNN or application may be quantized several times until acceptable performance of the quantized version is obtained. In this way, a trade-off analysis among accuracy, speed, memory usage, sensitivity, estimated throughput, Frame-Per-Second, memory access bandwidth for an FPGA target, operational intensity (number of bytes per second), power/energy usage, and/or latency may be performed. For example, the performance analysis may reveal that quantizing one or more layers of a DNN to 8-bit integer (int8) data types reduces the accuracy of the network below an acceptable level. In that case, one or more changes to the quantization options may include, for example, locking the data type for one or more layers to half precision floating point (half), changing the outlier selection, changing the rounding mode, applying a different metric function, etc.

Returning to decision block 438 (Fig. 4D), if (or when) the performance of the quantized application is determined to be acceptable, the code generator 212 may generate code for the quantized DNN or quantized application, as indicated by Yes arrow 444 leading to block 446. In some embodiments, the quantization engine 301 may save the data types proposed for the quantized version of the DNN or application. The code generator 212 may generate code using this quantization plan with the original DNN or application. For example, a quantization scheme and DNN may be imported by the code generator 212.

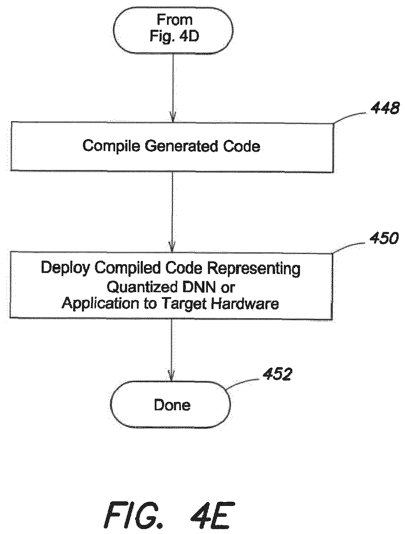

The generated code may be executable outside of the program development environment 200. For example, the generated code may be source code, e.g., C code, C++ code, MATLAB code, etc. In some embodiments, the compiler 214 may compile the generated code as indicated at block 448 (Fig. 4E). For example, the compiler 214 may compile the source code into an executable, such as object code. The program development environment 200 and/or another tool suite may deploy the compiled code to the target hardware, as indicated at block 450. In some embodiments, the compiled code, e.g., the executable, may be loaded in a memory of the target hardware and executed by a processor, such as a GPU. If the target hardware includes a programmable logic device, such as an FPGA, the generated code may be Hardware Description Language (HDL) code and a hardware synthesis tool chain or suite may be used to configure the programmable logic device from the HDL code. The quantization process may then be complete as indicated by Done step 452.

In some embodiments, the quantized application 102' and/or quantized DNNs 105' and 106' may be run in the program development environment 200 with or without generating code for the quantized application 102' and/or quantized DNNs 105' and 106'. For example, as a result of the quantization process, the quantized application 102' and/or quantized DNNs 105' and 106' may run faster within the program development environment 200, which may be running on a workstation having one or more CPUs, as compared to running the original application 102 and/or DNNs 105 and 106. Additional design and/or editing of the quantized application 102' and/or quantized DNNs 105' and 106' may be performed within the program development environment 200, for example by a user.

In some embodiments, formal verification of the quantized application 102' and/or quantized DNNs 105' and 106' may be performed. For example, the code generated for the quantized application 102' and/or quantized DNNs 105' and 106' may be provided to a formal verification tool and verified. Exemplary formal verification tools include the Polyspace Code Prover product from The MathWorks, Inc.

In some embodiments, the workflow illustrated in Figs. 4A-4E or a portion thereof may be repeated for a given DNN or application for multiple, different target hardware, such as a GPU and then an FPGA. The performance results generated for the different target hardware may be evaluated, e.g., by a user, to select the target hardware that best achieves one or more design objectives.

It should be understood that one or more of the User Interfaces (UIs) may take other forms.

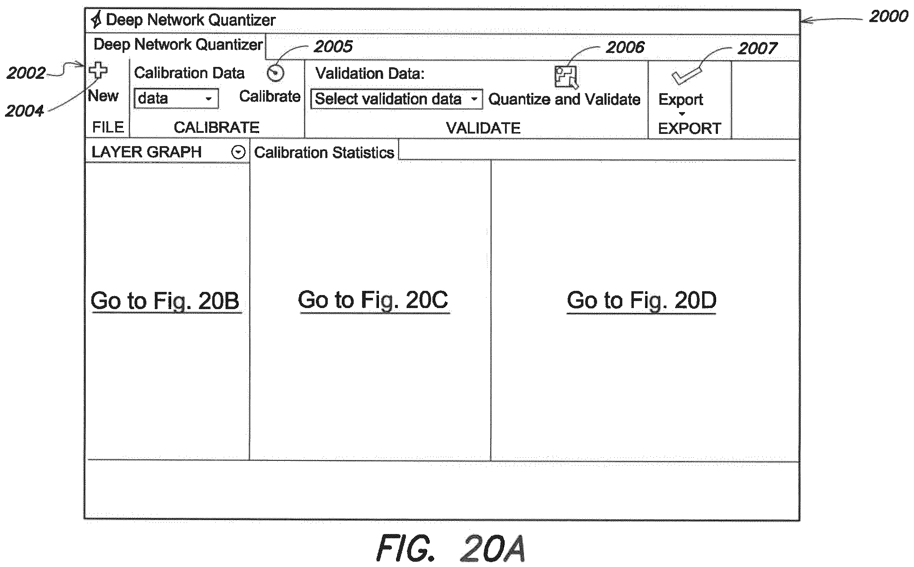

Figs. 20A-20D are partial views of a schematic illustration of another example User Interface (UI) 2000 for presenting statistics and/or attributes derived for an application or network based on the instrumentation data in accordance with one or more embodiments. The UI 2000 may include a toolstrip 2002 with command buttons 2004-2007 labeled 'File', 'Calibrate', 'Validate', and 'Export'. The UI 2000 also may include a graph view 2008 of the application or DNN to be quantized. The application or DNN may include a convolutional neural network, such as SqueezeNet, which is a pretrained network that can classify images into 1000 object categories, such as keyboard, mouse, pencil, cat, dog, and many other animals.

The UI 2000 may include and be opened to a tab 2010 labeled 'Calibration Statistics' having a main pane 2012 that presents statistics on data values produced at the instrumentation points of the application or DNN. In some embodiments, the statistics view may include data views, such as a spreadsheet view 2014 and a heatmap histogram view 2016. The spreadsheet view 2014 may include rows corresponding to at least some of the layers of the application or DNN, e.g., SqueezeNet. For example, the spreadsheet view 2014 may include rows for the layers of the application or DNN that can be instrumented by the instrumentation engine 302, e.g., convolution and fully connected layers. At least some of the rows may be expanded to show the instrumentation points of the layer, such as activations, weights, and biases, or collapsed to hide the layer's instrumentation points. For example, the spreadsheet view 2014 may include rows 2018-2028 for convolution layers of the application. The spreadsheet view 2014 also may include columns, such as a Layer Name column 2030, a Range Minimum value (Min Value) column 2032, and a Range Maximum value (Max Value) column 2034. In some embodiments, the spreadsheet view 2014 also may include a Quantize column 2036 that may have checkboxes that can be selected or unselected, e.g., by a user. If a checkbox is selected, then calibration may be performed for the layer associated with the checkbox. If a checkbox is unselected, the calibration may not be performed for the layer.

The heatmap histogram view 2016 may present a heatmap of the range bin and precision bin information derived by the statistics generator 304 for data values computed at the instrumentation points. As described, the statistics generator 304 may assign or place each data value generated at an instrumentation point in a power-of-two range bin and a power-of-two precision bin. The histogram view 2016 may include summary histogram elements 2038a-r that are aligned side-by-side with the instrumentation point of the application for which the histogram data was generated. The summary histogram elements 2038 may be plotted relative to a histogram bins axis 2040 that indicates the powers-of-two bins to which data values are assigned. As indicated by a legend 2042, graphical affordances, such as color coding, may be used to designate two regions or portions of the summary histogram elements 2038. A first region, using blue shading, indicates the data values computed at the instrumentation point that can be represented by the data type of the quantized representation, e.g., in-range values. A second region using gray shading indicates the data values computed at the instrumentation portion that cannot be represented by the data type of the quantized representation, e.g., clamped out values. For example, the summary histogram element 2038g may include a first region 2044 and a second region 2046. The number of occurrences of values falling in a given power-of-two bin may be represented in the summary histogram elements 2038 through a graphical affordance, such as blue shading. For example, the darker blue the shading of that part of a summary histogram element 2038 matching a particular bin the higher the number of occurrences of computed values at the particular bin while the lighter blue the shading the fewer number of occurrences at the particular bin.

Nodes of the graph view 2008 may be linked to rows of the spreadsheet view 2014 such that the UI engine 202, in response to selection of a node in the graph view 2008, e.g., by a user, may mark or designate, e.g., using highlighting, the row in the spreadsheet view 2014 that is associated with the selected node and vice versa. For example, the graph view 2008 may include a node 2048 for a convolution layer called 'fire2-relu_squeezenet'. In response to selection of the node 2048, the UI engine 202 may highlight the row 2022 of the spreadsheet view 2014. Similarly, in response to selection of row 2022, the UI engine 202 may highlight the node 2048.

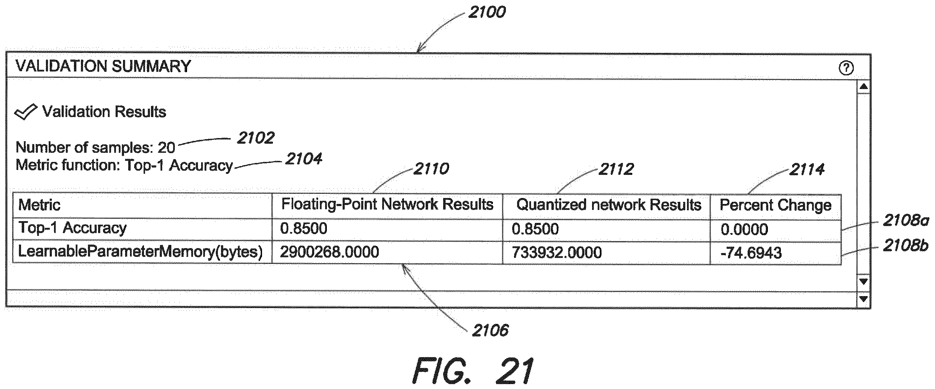

Fig. 21 is a schematic illustration of another example User Interface (UI) 2100 for presenting validation results for a quantized application based in accordance with one or more embodiments. The UI 2100 may include an entry 2102 that indicates how many input samples, e.g., images, were processed by the quantized application during validation, i.e., 20. The UI 2100 may include an entry 2104 that indicates the metric function used in the validation of the quantized application, e.g., the 'Top-1 Accuracy' function, which calculates the percentage that the quantized application correctly classified the validation data. The UI 2100 also may include a performance comparison block 2106. The block 2106 may be arranged as a table with rows and columns defining cells, such as a row 2108a for the selected metric function, e.g., 'Top-1 Accuracy', and a row 2108b for the memory needed to store the network's learnable parameters. The block 2106 also may include a column 2110 indicating the performance of the DNN or application before quantization, e.g., using a floating-point data type, a column 2112 indicating the performance of the quantized DNN or application, and a column 2114 indicating the change in the DNN's or application's performance following quantization. As illustrated, the quantized DNN or application had the same accuracy as the DNN or application before quantization, but quantization achieved nearly 75% reduction in memory utilization of the learnable parameters, e.g., 2.9GB down to 733MB

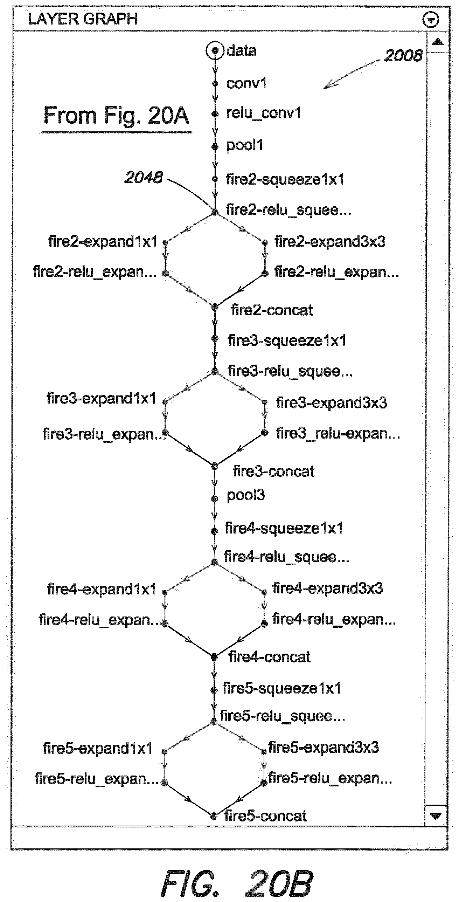

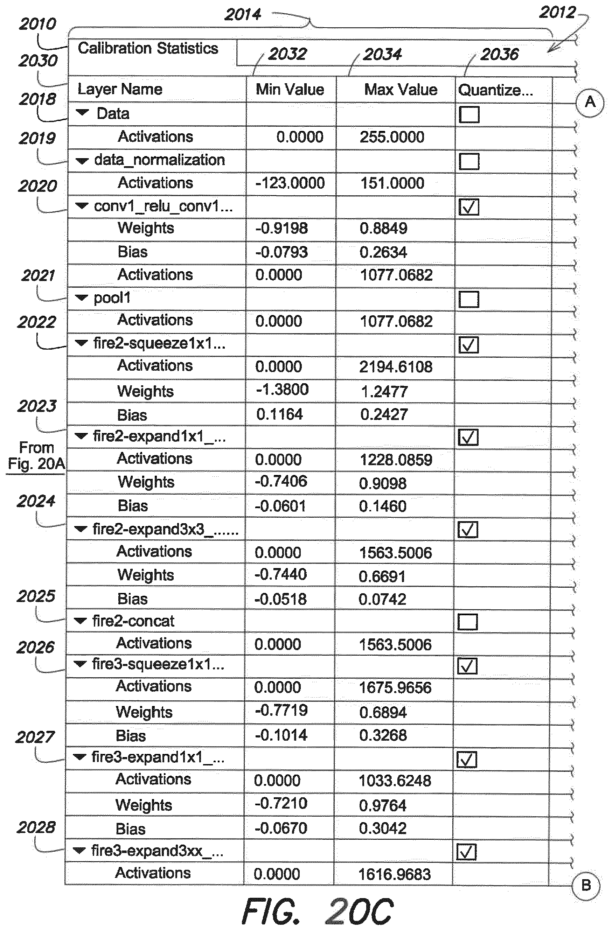

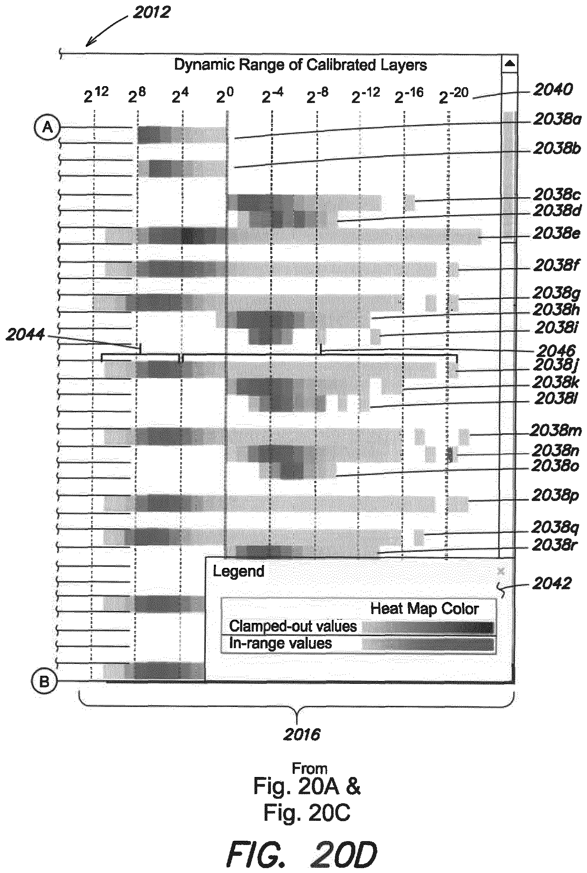

In some embodiments, the UI engine 202 may present the UI 2100 as a floating window that may be overlaid on the UI 2000 (Fig. 20).

It also should be understood that the example User Interfaces described herein are provided for explanation purposes only and that the present disclosure may be implemented at least in part using text-based commands of a Command Line Interface (CLI) instead of or in addition to Graphical User Interfaces (GUIs).

An exemplary syntax for use in a CLI is

quantObj = dlquantizer(net, 'ExecutionEnvironment') where

'dlquantizer' is a function that creates on object for use in quantizing an application or DNN,

'net', an input to the dlquantizer function, is the application or DNN to be quantized,

'ExecutionEnvironment', another input to the dlquantizer function, identifies the target hardware for running the quantized application or DNN, and

quantObj, the output of the dlquantizer function, is a quantizerObject that comprises the quantized application or DNN representation.

Other functions include:
calResults = calibrate(quantObj, calData) where

'calibrate' is a function for exercising the application or DNN with sample inputs and collecting range information,

'quantObj', an input to the calibrate function, is the object created by the dlquantizer function,

'calData', another input to the calibrate function, is the sample input data for calibrating the application or DNN, and

'calResults', the output of the calibrate function, may be in the form of a table that provides the name of the points, e.g., layers, of the application or DNN that were instrumented and the minimum and maximum computed values.

Another function includes:
valResults = validate(quantObj, valData, quantOpts) where

'validate' is a function for quantizing and running the application or DNN to produce validation results,

'quantObj', an input to the calibrate function, is the object created by the dlquantizer function,

'valData', another input to the calibrate function, is the sample input data for validating the quantized application or DNN,

'quantOpts', another input to the calibrate function, specifies one or more options, such as the metric function for validating the quantized application or DNN,

'valResults', the output of the calibrate function, may include the result computed by the specified metric function and the memory utilization of the application or DNN as compared to the quantized application.

It should be understood that is an example and that more and/or other performance characteristics and/or metrics may be captured, for example based on the target used for deployment.

In some embodiments, parameter pooling may be performed, e.g., the same scaling factors may be applied across weights and biases, for example when targeting FPGA hardware. Also, for a numerically insensitive layer, such as Max Pool, the quantized inputs may simply be passed through the layer.

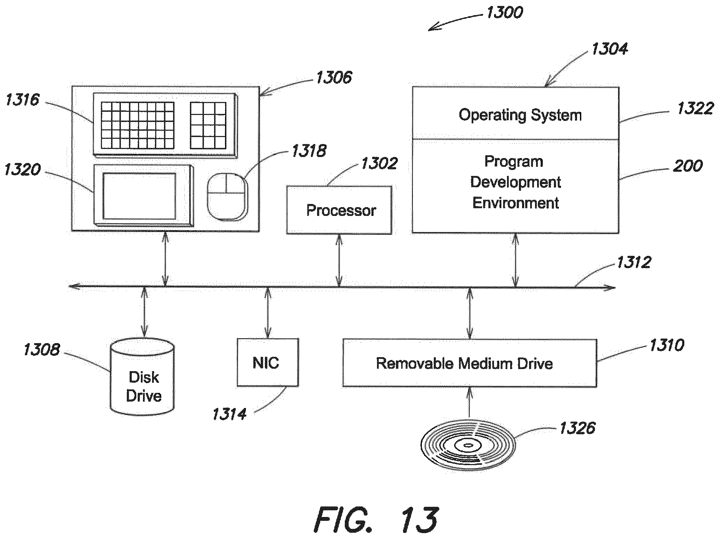

Fig. 13 is a schematic illustration of a computer or data processing system 1300 for implementing one or more embodiments of the disclosure. The computer system 1300 may include one or more processing elements, such as a processor 1302, a main memory 1304, user input/output (I/O) 1306, a persistent data storage unit, such as a disk drive 1308, and a removable medium drive 1310 that are interconnected by a system bus 1312. The computer system 1300 may also include a communication unit, such as a network interface card (NIC) 1314. The user I/O 1306 may include a keyboard 1316, a pointing device, such as a mouse 1318, and a display 1320. Other user I/O 1306 components include voice or speech command systems, touchpads and touchscreens, printers, projectors, etc. Exemplary processors include single or multi-core Central Processing Units (CPUs), Graphics Processing Units (GPUs), Field Programmable Gate Arrays (FPGAs), Application Specific Integrated Circuits (ASICs), microprocessors, microcontrollers, etc.

The main memory 1304, which may be a Random Access Memory (RAM), may store a plurality of program libraries or modules, such as an operating system 1322, and one or more application programs that interface to the operating system 1322, such as the program development environment 200.

The removable medium drive 1310 may accept and read a computer readable medium 1326, such as a CD, DVD, floppy disk, solid state drive, tape, flash memory or other non-transitory medium. The removable medium drive 1310 may also write to the computer readable medium 1326.

Suitable computer systems include personal computers (PCs), workstations, servers, laptops, tablets, palm computers, smart phones, electronic readers, and other portable computing devices, etc. Nonetheless, those skilled in the art will understand that the computer system 1300 of Fig. 13 is intended for illustrative purposes only, and that the present disclosure may be used with other computer, data processing, or computational systems or devices. Aspects of the present disclosure may also be used in a computer network, e.g., client-server, architecture, or a public and/or private cloud computing arrangement. For example, the modeling environment 1300 may be hosted on one or more cloud servers or devices, and accessed by remote clients through a web portal or an application hosting system, such as the Remote Desktop Connection tool from Microsoft Corp.

Suitable operating systems 1322 include the Windows series of operating systems from Microsoft Corp. of Redmond, WA, the Android and Chrome OS operating systems from Google Inc. of Mountain View, CA, the Linux operating system, the MAC OS® series of operating systems from Apple Inc. of Cupertino, CA, and the UNIX® series of operating systems, among others. The operating system 1322 may provide services or functions for applications or modules, such as allocating memory, organizing data objects or files according to a file system, prioritizing requests, managing I/O, etc. The operating system 1322 may run on a virtual machine, which may be provided by the data processing system 1300.

As indicated above, a user, such as an engineer, scientist, programmer, developer, etc., may utilize one or more input devices, such as the keyboard 1316, the mouse 1318, and the display 1320 to operate the program development environment 200.

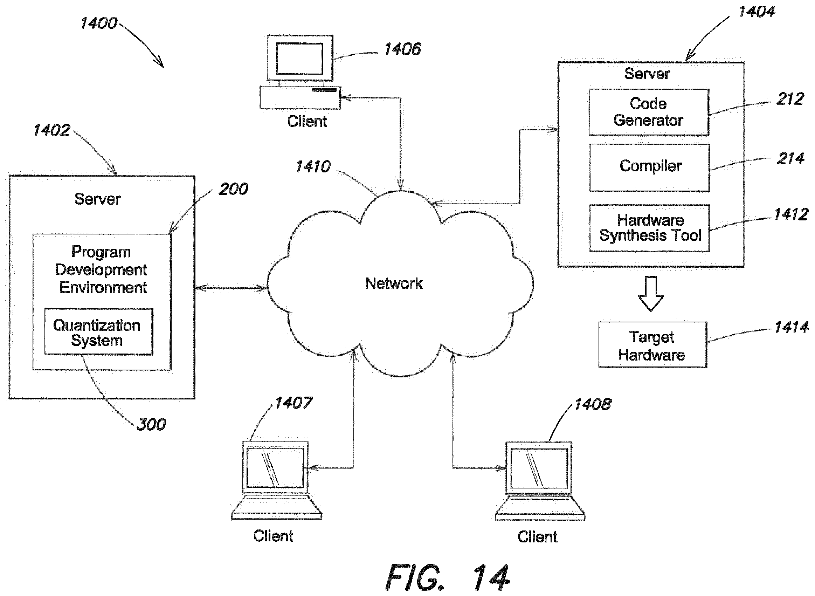

Fig. 14 is a schematic diagram of a distributed computing environment 1400 in which systems and/or methods described herein may be implemented. The environment 1400 may include client and server devices, such as two servers 1402 and 1404, and three clients 1406-1408, interconnected by one or more data communication networks, such as network 1410. The devices of the environment 1400 may be interconnected via wired connections, wireless connections, or a combination of wired and wireless connections. The servers 1402 and 1404 may include one or more devices capable of receiving, generating, storing, processing, executing, and/or providing information. For example, the servers 1402 and 1404 may include a computing device, such as a server, a desktop computer, a laptop computer, a tablet computer, a handheld computer, or a similar device.

The clients 1406-1408 may be capable of receiving, generating, storing, processing, executing, and/or providing information. Information may include any type of machine-readable information having substantially any format that may be adapted for use, e.g., in one or more networks and/or with one or more devices. The information may include digital information and/or analog information. The information may further be packetized and/or non-packetized. In an embodiment, the clients 1406-1408 may download data and/or code from the servers 1402 and 1404 via the network 1410. In some implementations, the clients 1406-1408 may be desktop computers, workstations, laptop computers, tablet computers, handheld computers, mobile phones (e.g., smart phones, radiotelephones, etc.), electronic readers, or similar devices. In some implementations, the clients 1406-1408 may receive information from and/or transmit information to the servers 1402 and 1404.

The network 1410 may include one or more wired and/or wireless networks. For example, the network 1410 may include a cellular network, a public land mobile network (PLMN), a local area network (LAN), a wide area network (WAN), a metropolitan area network (MAN), a telephone network (e.g., the Public Switched Telephone Network (PSTN)), an ad hoc network, an intranet, the Internet, a fiber optic-based network, and/or a combination of these or other types of networks. Information may be exchanged between network devices using any network protocol, such as, but not limited to, the Internet Protocol (IP), Asynchronous Transfer Mode (ATM), Synchronous Optical Network (SONET), the User Datagram Protocol (UDP), Institute of Electrical and Electronics Engineers (IEEE) 802.11, etc.

The servers 1402 and 1404 may host applications or processes accessible by the clients 1406-1408. For example, the server 1402 may include the program development environment 200, which may include the quantization system 300. The server 1404 may include a code generator, such as the code generator 212, a compiler, such as the compiler 214, and a hardware synthesis tool 1412. As described, the code generator 212 may generate code for the quantized application 102' or DNN, which may be deployed on target hardware 1414, which may be a real-world system. In other embodiments, code generated by the code generator 212 may be provided to the hardware synthesis tool 1412. The hardware synthesis tool 1414 may translate the generated code into a bitstream or other format, and may synthesize, e.g., configure, a programmable logic device of the target hardware 1414. In this way, the functionality defined by the quantized application 102' may be deployed to a real-world system.

The number of devices and/or networks shown in Fig. 14 is provided as an example. In practice, there may be additional devices and/or networks, fewer devices and/or networks, different devices and/or networks, or differently arranged devices and/or networks than those shown in Fig. 14. Furthermore, two or more devices shown in Fig. 14 may be implemented within a single device, or a single device shown in Fig. 14 may be implemented as multiple, distributed devices. Additionally, one or more of the devices of the distributed computing environment 1400 may perform one or more functions described as being performed by another one or more devices of the environment 1400.

The following examples implement one or more aspects of methods and/or systems of the present disclosure. These examples are non-limiting examples. Features of different examples may be combined in other implementations. Features of each example may be modified or removed in other implementations.

Aspect 1. A computer-implemented method comprising, for a neural network that includes a plurality of network layers and one or more target hardware devices on which the neural network is to run, determining at least two points within the neural network that generate numeric values during execution of the neural network, the numeric values represented as a floating point data type; presenting a first visualization of statistics generated for the numeric values; quantizing the neural network at the at least two points within the neural network, wherein the at least two points are two or more of inputs to the plurality of network layers, outputs of the plurality of network layers, or intermediate values of the plurality of network layers, the quantizing including changing the floating point data type for the numeric values to an integer data type or a fixed point data type, the quantizing based on one or more characteristics of the one or more target hardware devices including that the one or more target hardware devices supports the integer data type or the fixed point data type; generating performance information for the neural network following the quantizing; presenting a second visualization of the performance information; and generating code for the neural network following the quantizing.

Aspect 2. The computer-implemented method of aspect 1 wherein the code generated for the neural network is executable on the target hardware device.

Aspect 3. The computer-implemented method of aspects 1 or 2 wherein the at least two points are determined automatically based on a type of the one or more target hardware devices.

Aspect 4. The computer-implemented method of any of the preceding aspects, in particular of aspect 1, further comprising generating the statistics for the numeric values based on a running of the neural network on instrumentation data.

Aspect 5. The computer-implemented method of any of the preceding aspects, in particular of aspect 4, wherein the generating the statistics includes assigning the numeric values to power of two bins representing at least one of range or precision of the numeric values.

Aspect 6. The computer-implemented method of any of the preceding aspects, in particular of aspect 5, wherein the first visualization includes a heat map based on the assigning the numeric values to the power of two bins.

Aspect 7. The computer-implemented method of any of the preceding aspects, in particular of aspect 4, wherein the statistics are generated for the numeric values at each of the at least two points and the statistics include at least one of a minimum range value, a maximum range value, a number of times the numeric values are zero, or an indication whether the numeric values are always an integer.

Aspect 8. The computer-implemented method of any of the preceding aspects wherein the first visualization includes histogram heat map elements that present range information and precision information for the numeric values at the at least two points within the neural network.

Aspect 9. The computer-implemented method of any of the preceding aspects wherein the quantizing includes applying a quantization scheme that specifies allowable formats of the integer data type or the fixed point data type.

Aspect 10. The computer-implemented method of any of the preceding aspects wherein the performance information includes at least one of inference accuracy, inference time, or memory usage.

Aspect 11. The computer-implemented method of any of the preceding aspects wherein the inference accuracy is determined based on a user selected metric function.

Aspect 12. The computer-implemented method of any of the preceding aspects wherein the quantizing is based on at least one of the following user adjustable options: selected layers from the plurality of network layers of the neural network, an outlier threshold, an inclusion threshold, or a rounding mode.

Aspect 13. A computer-implemented method comprising for a neural network that includes a plurality of network layers, determining a plurality of points within the neural network that generate numeric values during execution of the neural network, the numeric values represented as a floating point data type by the neural network; executing, by one or more processors, the neural network, the executing utilizing instrumentation data; deriving, by the one or more processors, statistics for the numeric values during the executing; presenting the statistics on a display; quantizing, by the one or more processors, the at least two points within the neural network, the quantizing including changing the floating point data type for the numeric values to an integer data type or a fixed point data type, the quantizing based on a quantization scheme and being constrained by a limitations of a target hardware device on which the neural network is to run; generating, by the one or more processors, performance information for the neural network following the quantizing; presenting the performance information on the display; and changing the quantization scheme and repeating the quantizing step, the generating step, and the presenting the performance information step.

Aspect 14. The computer-implemented method of aspect 13 wherein the quantization scheme indicates the integer data type or the fixed point data type.

Aspect 15. The computer-implemented method of aspect 13 or 14 wherein the floating point data type is at least one of double precision floating point or single precision floating point and the quantization scheme constrains the changing the floating point data type to an 8-bit integer data type or a half precision floating point data type.

The foregoing description of embodiments is intended to provide illustration and description, but is not intended to be exhaustive or to limit the disclosure to the precise form disclosed. Modifications and variations are possible in light of the above teachings or may be acquired from a practice of the disclosure. For example, while a series of acts has been described above with respect to the flow diagrams, the order of the acts may be modified in other implementations. In addition, the acts, operations, and steps may be performed by additional or other modules or entities, which may be combined or separated to form other modules or entities. Further, non-dependent acts may be performed in parallel. Also, the term "user", as used herein, is intended to be broadly interpreted to include, for example, a computer or data processing system or a human user of a computer or data processing system, unless otherwise stated.

Further, certain embodiments of the disclosure may be implemented as logic that performs one or more functions. This logic may be hardware-based, software-based, or a combination of hardware-based and software-based. Some or all of the logic may be stored in one or more tangible non-transitory computer-readable storage media and may include computer-executable instructions that may be executed by a computer or data processing system. The computer-executable instructions may include instructions that implement one or more embodiments of the disclosure. The tangible non-transitory computer-readable storage media may be volatile or non-volatile and may include, for example, flash memories, dynamic memories, removable disks, and non-removable disks.

No element, act, or instruction used herein should be construed as critical or essential to the disclosure unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

The foregoing description has been directed to specific embodiments of the present disclosure. It will be apparent, however, that other variations and modifications may be made to the described embodiments, with the attainment of some or all of their advantages. For example, generated code may be utilized advantageously with other embedded hardware. Therefore, it is the object of the appended claims to cover all such variations and modifications as come within the true spirit and scope of the disclosure.

In view of the above, the present application may disclose the following items:

Item 1. A computer-implemented method comprising:

for a neural network that includes a plurality of network layers and one or more target hardware devices on which the neural network is to run,
determining at least two points within the neural network that generate numeric values during execution of the neural network, the numeric values represented as a floating point data type;
presenting a first visualization of statistics generated for the numeric values;
quantizing the neural network at the at least two points within the neural network, wherein the at least two points are two or more of inputs to the plurality of network layers, outputs of the plurality of network layers, or intermediate values of the plurality of network layers, the quantizing including changing the floating point data type for the numeric values to an integer data type or a fixed point data type, the quantizing based on one or more characteristics of the one or more target hardware devices including that the one or more target hardware devices supports the integer data type or the fixed point data type;
generating performance information for the neural network following the quantizing;
presenting a second visualization of the performance information; and
generating code for the neural network following the quantizing.

Item 2. The computer-implemented method of item 1 wherein the code generated for the neural network is executable on the target hardware device.

Item 3. The computer-implemented method of item 1 or 2 wherein the at least two points are determined automatically based on a type of the one or more target hardware devices.

Item 4. The computer-implemented method of any one of the preceding items further comprising:
generating the statistics for the numeric values based on a running of the neural network on instrumentation data.

Item 5. The computer-implemented method of any one of the preceding items wherein the generating the statistics includes assigning the numeric values to power of two bins representing at least one of range or precision of the numeric values.

Item 6. The computer-implemented method of any one of the preceding items wherein the first visualization includes a heat map based on the assigning the numeric values to the power of two bins.

Item 7. The computer-implemented method of any one of the preceding items wherein the statistics are generated for the numeric values at each of the at least two points and the statistics include at least one of:

a minimum range value,
a maximum range value,
a number of times the numeric values are zero, or
an indication whether the numeric values are always an integer.

Item 8. The computer-implemented method of any one of the preceding items wherein the first visualization includes histogram heat map elements that present range information and precision information for the numeric values at the at least two points within the neural network.

Item 9. The computer-implemented method of any one of the preceding items wherein the quantizing includes applying a quantization scheme that specifies allowable formats of the integer data type or the fixed point data type.

Item 10. The computer-implemented method of any one of the preceding items wherein the performance information includes at least one of inference accuracy, inference time, or memory usage.

Item 11. The computer-implemented method of any one of the preceding items wherein the inference accuracy is determined based on a user selected metric function.

Item 12. The computer-implemented method of any one of the preceding items wherein the quantizing is based on at least one of the following user adjustable options:

selected layers from the plurality of network layers of the neural network,
an outlier threshold,
an inclusion threshold, or
a rounding mode.

Item 13. One or more non-transitory computer-readable media having stored thereon instructions that, when executed by a computing device, cause the computing device to perform operations comprising:

for a neural network that includes a plurality of network layers and one or more target hardware devices on which the neural network is to run,
determining at least two points within the neural network that generate numeric values during execution of the neural network, the numeric values represented as a floating point data type;
presenting a first visualization of statistics generated for the numeric values;
quantizing the neural network at the at least two points within the neural network, wherein the at least two points are two or more of inputs to the plurality of network layers, outputs of the plurality of network layers, or intermediate values of the plurality of network layers, the quantizing including changing the floating point data type for the numeric values to an integer data type or a fixed point data type, the quantizing based on one or more characteristics of the one or more target hardware devices including that the one or more target hardware devices supports the integer data type or the fixed point data type;
generating performance information for the neural network following the quantizing;
presenting a second visualization of the performance information; and
generating code for the neural network following the quantizing.

Item 14. The one or more non-transitory computer-readable media of item 13 wherein the at least two points are determined automatically based on a type of the one or more target hardware devices.

Item 15. The one or more non-transitory computer-readable media of item 13 or 14 the operations further comprise: generating the statistics for the numeric values based on a running of the neural network on instrumentation data.

Item 16. The one or more non-transitory computer-readable media of any one of preceding items 13 to 15 wherein the generating the statistics includes assigning the numeric values to power of two bins representing at least one of range or precision of the numeric values.

Item 17. The one or more non-transitory computer-readable media of any one of preceding items 13 to 16 wherein the first visualization includes a heat map based on the assigning the numeric values to the power of two bins.

Item 18. The one or more non-transitory computer-readable media of any one of preceding items 13 to 17 wherein the statistics are generated for the numeric values at each of the at least two points and the statistics include at least one of:

a minimum range value,
a maximum range value,
a number of times the numeric values are zero, or
and an indication whether the numeric values are always an integer.

Item 19. An apparatus comprising:

a memory storing a neural network that includes a plurality of network layers and one or more target hardware devices on which the neural network is to run; and
one or more processors configured to:

determine at least two points within the neural network that generate numeric values during execution of the neural network, the numeric values represented as a floating point data type;
present a first visualization of statistics generated for the numeric values;
quantize the neural network at the at least two points within the neural network, wherein the at least two points are two or more of inputs to the plurality of network layers, outputs of the plurality of network layers, or intermediate values of the plurality of network layers, the quantizing including changing the floating point data type for the numeric values to an integer data type or a fixed point data type, the quantizing based on one or more characteristics of the one or more target hardware devices including that the one or more target hardware devices supports the integer data type or the fixed point data type;
generate performance information for the neural network following the quantizing;
present a second visualization of the performance information; and
generate code for the neural network following the quantizing.

Item 20. The apparatus of item 19 wherein the at least two points are determined automatically based on a type of the one or more target hardware devices.

Item 21. The apparatus of item 19 or 20 the operations further comprise:
generating the statistics for the numeric values based on a running of the neural network on instrumentation data.

Item 22. The apparatus of any one of preceding items 13 to 21 wherein the generating the statistics includes assigning the numeric values to power of two bins representing at least one of range or precision of the numeric values.

Item 23. The apparatus of any one of preceding items 13 to 22 wherein the statistics are generated for the numeric values at each of the at least two points and the statistics include at least one of:

a minimum range value,
a maximum range value,
a number of times the numeric values are zero, or
and an indication whether the numeric values are always an integer.

Item 24. A computer-implemented method comprising:

for a neural network that includes a plurality of network layers, determining a plurality of points within the neural network that generate numeric values during execution of the neural network, the numeric values represented as a floating point data type by the neural network;
executing, by one or more processors, the neural network, the executing utilizing instrumentation data;
deriving, by the one or more processors, statistics for the numeric values during the executing;
presenting the statistics on a display;
quantizing, by the one or more processors, the at least two points within the neural network, the quantizing including changing the floating point data type for the numeric values to an integer data type or a fixed point data type, the quantizing based on a quantization scheme and being constrained by a limitation of a target hardware device on which the neural network is to run;
generating, by the one or more processors, performance information for the neural network following the quantizing;
presenting the performance information on the display; and
changing the quantization scheme and repeating the quantizing step, the generating step, and the presenting the performance information step.

Item 25. The computer-implemented method of item 24 wherein the quantization scheme indicates the integer data type or the fixed point data type.

Item 26. The computer-implemented method of item 24 or 25 wherein the floating point data type is at least one of double precision floating point or single precision floating point and the quantization scheme constrains the changing the floating point data type to an 8-bit integer data type or a half precision floating point data type.

**Claims**

1. A computer-implemented method comprising:

   for a neural network that includes a plurality of network layers and one or more target hardware devices on which the neural network is to run,
   determining at least two points within the neural network that generate numeric values during execution of the neural network, the numeric values represented as a floating point data type;
   presenting a first visualization of statistics generated for the numeric values;
   quantizing the neural network at the at least two points within the neural network, wherein the at least two points are two or more of inputs to the plurality of network layers, outputs of the plurality of network layers, or intermediate values of the plurality of network layers, the quantizing including changing the floating point data type for the numeric values to an integer data type or a fixed point data type, the quantizing based on one or more characteristics of the one or more target hardware devices including that the one or more target hardware devices supports the integer data type or the fixed point data type;
   generating performance information for the neural network following the quantizing;
   presenting a second visualization of the performance information; and
   generating code for the neural network following the quantizing.

2. The computer-implemented method of claim 1 wherein the code generated for the neural network is executable on the target hardware device.

3. The computer-implemented method of claim 1 or 2 wherein the at least two points are determined automatically based on a type of the one or more target hardware devices.

4. The computer-implemented method of any one of the preceding claims further comprising:
   generating the statistics for the numeric values based on a running of the neural network on instrumentation data.

5. The computer-implemented method of any one of the preceding claims wherein the generating the statistics includes assigning the numeric values to power of two bins representing at least one of range or precision of the numeric values.

6. The computer-implemented method of any one of the preceding claims wherein the first visualization includes a heat map based on the assigning the numeric values to the power of two bins.

7. The computer-implemented method of any one of the preceding claims wherein the statistics are generated for the numeric values at each of the at least two points and the statistics include at least one of:

   a minimum range value,
   a maximum range value,
   a number of times the numeric values are zero, or
   an indication whether the numeric values are always an integer.

8. The computer-implemented method of any one of the preceding claims wherein the first visualization includes histogram heat map elements that present range information and precision information for the numeric values at the at least two points within the neural network;
   and/or
   wherein the quantizing includes applying a quantization scheme that specifies allowable formats of the integer data type or the fixed point data type.
   and/or
   wherein the performance information includes at least one of inference accuracy, inference time, or memory usage.

9. The computer-implemented method of any one of the preceding claims wherein the inference accuracy is determined based on a user selected metric function.

10. The computer-implemented method of any one of the preceding claims wherein the quantizing is based on at least one of the following user adjustable options:

  selected layers from the plurality of network layers of the neural network,
  an outlier threshold,
  an inclusion threshold, or
  a rounding mode.

11. One or more non-transitory computer-readable media having stored thereon instructions that, when executed by a computing device, cause the computing device to perform operations according to the method of any one of claims 1 to 10.

12. An apparatus comprising:

  a memory storing a neural network that includes a plurality of network layers and one or more target hardware devices on which the neural network is to run; and
  one or more processors configured to perform operations according to the method of any one of claims 1 to 10.

13. A computer-implemented method comprising:

  for a neural network that includes a plurality of network layers, determining a plurality of points within the neural network that generate numeric values during execution of the neural network, the numeric values represented as a floating point data type by the neural network;
  executing, by one or more processors, the neural network, the executing utilizing instrumentation data;
  deriving, by the one or more processors, statistics for the numeric values during the executing;
  presenting the statistics on a display;
  quantizing, by the one or more processors, the at least two points within the neural network, the quantizing including changing the floating point data type for the numeric values to an integer data type or a fixed point data type, the quantizing based on a quantization scheme and being constrained by a limitation of a target hardware device on which the neural network is to run;
  generating, by the one or more processors, performance information for the neural network following the quantizing;
  presenting the performance information on the display; and
  changing the quantization scheme and repeating the quantizing step, the generating step, and the presenting the performance information step.

14. The computer-implemented method of claim 13 wherein the quantization scheme indicates the integer data type or the fixed point data type.

15. The computer-implemented method of claim 13 or 14 wherein the floating point data type is at least one of double precision floating point or single precision floating point and the quantization scheme constrains the changing the floating point data type to an 8-bit integer data type or a half precision floating point data type.

FIG. 1

*200*

## Program Development Environment

User Interface
(UI) Engine
*202*

*300*

Quantization
System

Program Editor
*204*

*212*

Code Generator

*206*

Program
Execution Engine

*214*

Compiler

Interpreter
*208*

Compiler
*210*

## FIG. 2

FIG. 3

FIG. 4A

From
Fig. 4A

Execute Instrumented DNN or Application
Using Instrumentation Data as Input Data — 414

Analyze Data Values Produced
at Instrumentation Points — 416

Generate Statistics Based on Analysis
of Data Values at Instrumentation Points — 418

Present Statistics in One
or More Visualization Tools — 420

Quantize the DNN or Application
Based on the Quantization Options — 422

Go to
Fig. 4C

FIG. 4B

From
Fig. 4B

Present Data Type Proposals (Quantization)
in One or More Visualization Tools — 424

Modify DNN or Application to Implement
Data Type Proposals Creating
a Quantized DNN or Application — 426

Execute Quantized DNN or Application
Using Validation Data — 428

Generate Performance Data
for Quantized DNN or Application — 430

Execute Original DNN or Application
Using Validation Data — 432

Go to
Fig. 4D

FIG. 4C

From
Fig. 4C

Generate Performance Data for
Original DNN or Application
_434_

Present Comparison of Performance Data
Obtained for Original DNN or Application and Quantized
DNN or Application In One or More Visualization Tools
_436_

Receive Indication Whether
Performance of Quantized DNN
or Application is Acceptacle
?
_438_

No

_440_

Go to Step
410

_442_

_444_ Yes

Generate Code for Quantized DNN or Application
_446_

Go to
Fig. 4E

FIG. 4D

37

From
Fig. 4D

Compile Generated Code — 448

Deploy Compiled Code Representing
Quantized DNN or
Application to Target Hardware — 450

Done — 452

## FIG. 4E

FIG. 5

FIG. 6

700

## Import Data

Instrumentation                706                                    Validation             710

Data from: | Specify directory for instrumentation data ▼ |        Data from: | Split validation data from instrumentation data ▼ |

Image folder:        708                                              Percentage | 30 | ▲▼ |

| | Browse |                                                        712

702                                                                  704

| Close |

*FIG. 7*

FIG. 8

EP 3 843 013 A1

900

Metric Function: [@(x)hComputeAccuracy(x, testDataStore)]  902

• • •

| Rules | for Quantization

Allowable Data Types: [int8, half]  904

Choice of layers for quantization: [Automatic ▼]
[Manual]  } 906

Layers to quantize: [('conv1', 'res2a_branch2a')]  908

FIG. 9

FIG. 10A

| LayerName | Tensor ID | Channel ID | Range Min | Range Max | Number of Zeroes | IsAlwaysInteger |
|---|---|---|---|---|---|---|
| data | 1 —1010a | 1 | 0 | 255 | 7575074 | 1 |
| data | 1 —1010b | 2 | 0 | 255 | 53074 | 1 |
| data | 1 —1010c | 3 | 0 | 255 | 12354 | 1 |
| data_normalization | 1 —1010d | 1 | -130.78030955 | 156.7022095 | 0 | 0 |
| data_normalization | 1 —1010e | 2 | 130.78030955 | 156.7022095 | 0 | 0 |
| data_normalization | 1 —1010f | 3 | 130.78030955 | 156.7022095 | 0 | 0 |
| conv1 | 1 —1010g | 1 | -2492.8544 | 2170.9155 | 0 | 0 |
| conv1 | 1 —1010h | 2 | -249.85 | 127.2 | 12 | 0 |
| conv1 | 1 —1010i | 3 | -2348.12 | 456.234 | 0 | 0 |
| conv1 | 2 —1010j | 1 | 102.13 | 2192.344 | 212 | 0 |

FIG. 10B

*FIG. 11A*

From Fig. 11A

| Layer Name | Tensor ID | Channel ID | Range Min | Range Max | NumberOfZeroes | IsAlwaysInteger | Proposed Quantization Data Type |
|---|---|---|---|---|---|---|---|
| data | 1 | 1 | 0 | 255 | 7575074 | 1 | INT8 |
| data | 1 | 2 | 0 | 255 | 53074 | 1 | INT8 |
| data | 1 | 3 | 0 | 255 | 12354 | 1 | INT8 |
| data_normalization | 1 | 1 | -130.78030955 | 156.7022095 | 0 | 0 | INT8 |
| data_normalization | 1 | 2 | 130.78030955 | 156.7022095 | 0 | 0 | INT8 |
| data_normalization | 1 | 3 | 130.78030955 | 156.7022095 | 0 | 0 | INT8 |
| conv1 | 1 | 1 | -2492.8544 | 2170.9155 | 0 | 0 | INT16 |
| conv1 | 1 | 2 | -249.85 | 127.2 | 12 | 0 | INT8 |
| conv1 | 1 | 3 | -2348.12 | 456.234 | 0 | 0 | HALF |
| conv1 | 2 | 1 | -102.13 | 2192.344 | 212 | 0 | HALF |

FIG. 11B

EP 3 843 013 A1

512 513 514 515 516 517 518 519 520 521 522 1200

DLQuantizationApp

Import Application | Import Data | Data Settings | Share | Execution Environment | Requirements | Instrument | Quantize | Validate | Generate Report | Generate Code — 502

504 FILE 607 | 1002 TARGET 506 | 508 QUANTIZE | 510 EXPORT

Layer Graph | Network | Data | Calibration Statistics | Validation Summary | Quanitzed Network Statistics

⊙ data — 602
conv1
relu1
norm1
pool1
conv2
relu2
norm2
pool2
conv3
relu3
conv4
relu4
conv5
relu5
pool5
fc6
relu6
norm6
fc7

Quantization Summary — 1004 — 1202 — 1204

Data — 1206

Number of Samples: 400 — 1208

Number of samples used in calibration: 50000 — 1210

Results — 1212

Metric function: @(x)hComputationAccuracy(x, testDataStore) — 1214

| Metric | Floating Point Network Results | Quantized Network Results |
|---|---|---|
| User defined metric function | 0.8 | 0.6 — 1218 |
| Mean Inference Time | 100 images per sec | 400 images per sec — 1220 |
| Memory | 255 MB | 65 MB — 1222 |
| | | |

1216

Quantization Settings — 1224

Hardware Settings: GPU — 1226

Data types used: int8, half — 1228

Layers quantized: conv1, res2a_branch2b — 1230

604

606

*FIG. 12*

48

**FIG. 13**

1300

1304 Operating System
1322
Program Development Environment 200

1302 Processor
1312

1306
1318
1316
1320

NIC 1314

Disk Drive 1308

Removable Medium Drive 1310
1326

FIG. 14

EP 3 843 013 A1

FIG. 15A

FIG. 15B

## Quantization Methods - Dynamic Fixed Point

IEEE-74 Single Precision 32-bit format

Variable 1 = 127 =

| Sign | Exponent | Mantissa |
|------|----------|----------|
| 0 | 10000101 | 11111000000000000000000 |

Variable 2 = 254 =

| Sign | Exponent | Mantissa |
|------|----------|----------|
| 0 | 10000110 | 11111000000000000000000 |

Dynamice Fixed Point with 8-bit word size

Fixed Exponent = 1 =
0000 0001

(DFP) Variable 1 = 64 =
0100 0000

(DFP) Variable 2 = 127 =
0111 1111

*FIG. 16*

EP 3 843 013 A1

| 512 DLQuantizationApp | 513 | 514 | 515 516 | 517 | 518 | 519 | 520 521 | 522 | 1700 |

| Import Application | Import Data | ⚙ Data Settings  ⬛ Share | Execution Environment Requirements | | Instrument Quantize Validate | | Generate Report Generate Code | | 502 |

| FILE 504 | TARGET 506 | QUANTIZE 508 | EXPORT 510 |

| Layer Graph | Calibration Statistics \ Validation Results | Quantization Summary \ |
| | 1702 | 1710 |

**Layer Graph:**
- data
- conv1
- conv2
- conv3

Go to Fig. 17B

*FIG. 17A*

EP 3 843 013 A1

| Layer | Name | Quantized Range Min | Quantized Range Max |
|---|---|---|---|
| data | | | |
| | t1c1 | 0.123 | 0.134 |
| | t1c2 | 0.223 | 0.234 |
| | t1c3 | 0.223 | 0.234 |
| conv1 | | | |
| | Weights | 0.123 | 0.134 |
| | Bias | 0.223 | 0.234 |
| conv1 | | | |
| | Weights | 0.123 | 0.134 |
| | Bias | 0.223 | 0.234 |
| conv1 | | | |
| | Weights | 0.123 | 0.134 |
| | Bias | 0.223 | 0.234 |

Data

Number of samples: 400

Number of samples: 50000 used in calibration

Results

Metric function: @(x)hComputerAccuracy (x, testDataStore)

| Metric | Floating Point Network Results | Quantized Network Results |
|---|---|---|
| User defined metric function | 0.8 | 0.6 ——1716 |
| Mean inference time | 100 images per sec | 400 images per sec ——1712 |
| Memory | 255 MB | 65 MB ——1714 |

Quantized Settings:

Hardware Settings:    GPU

Data types used:     int8, half

Layers quantized:    conv1, res2a_branch2b

1718

1704    1706    1708

Histograms Bins

$2^{12}$   $2^{2}$   $2^{-8}$   $2^{-18}$   $2^{-28}$

**FIG. 17B**

FIG. 18A

Go to Fig. 18B

| LayerName ⬍ | Tensor ID | Channel ID | Data Type Choice | Range Min (Quantized) | Range Max (Quantized) | Max Quantization Error |
|---|---|---|---|---|---|---|
| data | 1 | 1 | INT8 | 0 | 255 | 0 |
| data | 1 | 2 | INT8 | 0 | 255 | 0 |
| data | 1 | 3 | INT8 | 0 | 255 | 0 |
| data_normalization | 1 | 1 | INT8 | -129.834 | 155.7034 | 1e-5 |
| data_normalization | 1 | 2 | INT8 | -129.834 | 155.7034 | 1e-5 |
| data_normalization | 1 | 3 | INT8 | -129.834 | 155.7034 | 1e-5 |
| conv1 | 1 | 1 | INT16 | -248.34 | 126.23 | 1e-7 |
| conv1 | 1 | 2 | HALF | -248.34 | 126.23 | 1e-9 |
| conv1 | 1 | 3 | HALF | -248.34 | 126.23 | 1e-5 |

**FIG. 18B**

EP 3 843 013 A1

FIG. 19A

# From Fig. 19A

| LayerName ▲ | Tensor ID ▲ | Channel ID ⬍ | | | | |
|---|---|---|---|---|---|---|
| data | 1 | 1 | Metric Function | @(x)hComputeAccuracy(x, test(DataStore)) | | —1904 |
| data | 1 | 2 | Heuristics for Quantization | | | |
| data | 1 | 3 | Allowable Data Types | int8, half | | —1905 |
| data_normalization | 1 | 1 | Choice of layers for quantization | Manual ▼ | —1906 | —1902 |
| data_normalization | 1 | 2 | Layers to quantize | ('conv1', 'res2a_branch2a') | —1907 | |
| data_normalization | 1 | 3 | Outlier selection threshold (Ratio) | 0.0001 | —1908 | |
| conv1 | 1 | 1 | Data inclusion threshold (%) | 95 | —1909 | |
| conv1 | 1 | 2 | Rounding mode | Nearest to zero ▼ | —1910 | |
| conv1 | 1 | 3 | | Stocastic | | |
| conv1 | 2 | 1 | -7392.34 | 98.873 | 34 | 0 |

*Histograms Bins* axis: $2^{12}$, $2^{2}$, $2^{-8}$, $2^{-18}$, $2^{-28}$

1028    1008

# FIG. 19B

EP 3 843 013 A1

*FIG. 20A*

EP 3 843 013 A1

**FIG. 20B**

| Calibration Statistics | Min Value | Max Value | Quantize... |
|---|---|---|---|
| ▼ Data | | | ☐ |
| Activations | 0.0000 | 255.0000 | |
| ▼ data_normalization | | | ☐ |
| Activations | -123.0000 | 151.0000 | |
| ▼ conv1_relu_conv1... | | | ☑ |
| Weights | -0.9198 | 0.8849 | |
| Bias | -0.0793 | 0.2634 | |
| Activations | 0.0000 | 1077.0682 | |
| ▼ pool1 | | | ☐ |
| Activations | 0.0000 | 1077.0682 | |
| ▼ fire2-squeeze1x1... | | | ☑ |
| Activations | 0.0000 | 2194.6108 | |
| Weights | -1.3800 | 1.2477 | |
| Bias | 0.1164 | 0.2427 | |
| ▼ fire2-expand1x1_... | | | ☑ |
| Activations | 0.0000 | 1228.0859 | |
| Weights | -0.7406 | 0.9098 | |
| Bias | -0.0601 | 0.1460 | |
| ▼ fire2-expand3x3_...... | | | ☑ |
| Activations | 0.0000 | 1563.5006 | |
| Weights | -0.7440 | 0.6691 | |
| Bias | -0.0518 | 0.0742 | |
| ▼ fire2-concat | | | ☐ |
| Activations | 0.0000 | 1563.5006 | |
| ▼ fire3-squeeze1x1... | | | ☑ |
| Activations | 0.0000 | 1675.9656 | |
| Weights | -0.7719 | 0.6894 | |
| Bias | -0.1014 | 0.3268 | |
| ▼ fire3-expand1x1_... | | | ☑ |
| Activations | 0.0000 | 1033.6248 | |
| Weights | -0.7210 | 0.9764 | |
| Bias | -0.0670 | 0.3042 | |
| ▼ fire3-expand3xx_... | | | ☑ |
| Activations | 0.0000 | 1616.9683 | |

2010
2030
2018
2019
2020
2021
2022
2023
From Fig. 20A
2024
2025
2026
2027
2028

2014
2012
2032
2034
2036

From Fig. 20A

A

B

FIG. 20C

EP 3 843 013 A1

From
Fig. 20A &
Fig. 20C

FIG. 20D

62

FIG. 21

| Original Values | Sign Bit | $2^6$ | $2^5$ | $2^4$ | $2^3$ | $2^2$ | $2^1$ | $2^0$ | $2^{-1}$ | $2^{-2}$ | $2^{-3}$ | $2^{-4}$ | $2^{-5}$ | $2^{-6}$ | $2^{-7}$ | $2^{-8}$ |
|---|---|---|---|---|---|---|---|---|---|---|---|---|---|---|---|---|
| 0.03125 | | | | | | | | | | | | | 1 | 0 | 0 | 0 |
| -0.250 | ✓ | | | | | | | | | 1 | 0 | 0 | 0 | 0 | 0 | 0 |
| 0.250 | | | | | | | | | | 1 | 0 | 0 | 0 | 0 | 0 | 0 |
| 0.500 | | | | | | | | | 1 | 0 | 0 | 0 | 0 | 0 | 0 | 0 |
| 1.000 | | | | | | | | 1 | 0 | 0 | 0 | 0 | 0 | 0 | 0 | 0 |
| 2.100 | | | | | | | 1 | 0 | 0 | 0 | 0 | 1 | 1 | 0 | 0 | 1 |
| -2.125 | ✓ | | | | | | 1 | 0 | 0 | 0 | 1 | 0 | 0 | 0 | 0 | 0 |
| 8.250 | | | | | 1 | 0 | 0 | 0 | 0 | 1 | 0 | 0 | 0 | 0 | 0 | 0 |
| 16.250 | | | | 1 | 0 | 0 | 0 | 0 | 0 | 1 | 0 | 0 | 0 | 0 | 0 | 0 |
| | ✓ | | | 1 | 1 | 0 | 2 | 1 | 1 | 2 | 0 | 0 | 1 | | MSB Sum By Column | |

Heat Map Legend

Zero Count — Max Count

FIG. 22

FIG. 23

2300 · 2202 · 2302 · 2304 · 2306 · 2308 · 2310 Underflow · 2312 Precision Loss · 2314 Overflow · 2222 · 2236

| Original Values | Sign Bit | $2^6$ | $2^5$ | $2^4$ | $2^3$ | $2^2$ | $2^1$ | $2^0$ | $2^{-1}$ | $2^{-2}$ | $2^{-3}$ | $2^{-4}$ | $2^{-5}$ | $2^{-6}$ | $2^{-7}$ | $2^{-8}$ | 8 Bit Binary Rep | Quantized Value |
|---|---|---|---|---|---|---|---|---|---|---|---|---|---|---|---|---|---|---|
| 0.03125 | | | | | | | | | | | | | 1 | 0 | 0 | 0 | 00000000 | 0.000 |
| -0.250 | ✓ | | | | | | | | | 1 | 0 | 0 | 0 | 0 | 0 | 0 | 10000010 | -0.250 |
| 0.250 | | | | | | | | | | 1 | 0 | 0 | 0 | 0 | 0 | 0 | 00000010 | 0.250 |
| 0.500 | | | | | | | | | 1 | 0 | 0 | 0 | 0 | 0 | 0 | 0 | 00000100 | 0.500 |
| 1.000 | | | | | | | | 1 | 0 | 0 | 0 | 0 | 0 | 0 | 0 | 0 | 00001000 | 1.000 |
| 2.100 | | | | | | | 1 | 0 | 0 | 0 | 0 | 1 | 1 | 0 | 0 | 1 | 00010001 | 2.125 |
| -2.125 | ✓ | | | | | | 1 | 0 | 0 | 0 | 1 | 1 | 0 | 0 | 0 | 0 | 10010001 | -2.125 |
| 8.250 | | | | | 1 | 0 | 0 | 0 | 0 | 1 | 0 | 0 | 0 | 0 | 0 | 0 | 01000010 | 8.250 |
| 16.250 | | | | 1 | 0 | 0 | 0 | 0 | 0 | 1 | 0 | 0 | 0 | 0 | 0 | 0 | 01111111 | 15.874 |
| MSB Sum By Column | ✓ | | | 1 | 1 | 0 | 2 | 1 | 1 | 2 | 0 | 0 | 1 | | | | | |

Sign Bit · Overflow · Estimated 8-Bit Range (Inncluding Sign Bit) · Precision Loss Bits

EP 3 843 013 A1

Europäisches Patentamt
European Patent Office
Office européen des brevets

# EUROPEAN SEARCH REPORT

Application Number

EP 20 21 3028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/130255 A1 (YIM HAN-YOUNG [KR] ET AL) 2 May 2019 (2019-05-02) * paragraph [0032] - paragraph [0090]; claim 1; figures 1, 2, 3, 5, 6, 7, 9 * | 1-15 | INV. G06N3/063 |
| X | GB 2 568 083 A (IMAGINATION TECH LTD [GB]) 8 May 2019 (2019-05-08) * paragraph [0006] - paragraph [0094] * | 1-15 | |
| X | US 2019/340492 A1 (BURGER DOUGLAS C [US] ET AL) 7 November 2019 (2019-11-07) * paragraph [0030] - paragraph [0118]; figures 1, 5, 9 * | 1-15 | |
| A | JUN HAENG LEE ET AL: "Quantization for Rapid Deployment of Deep Neural Networks", CORR (ARXIV), vol. 1810.05488, no. v1, 12 October 2018 (2018-10-12), pages 1-9, XP055566178, * the whole document * | 1-15 | TECHNICAL FIELDS SEARCHED (IPC) G06N |

The present search report has been drawn up for all claims

| Place of search | Date of completion of the search | Examiner |
|---|---|---|
| Munich | 12 May 2021 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3028

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2021

| Patent document cited in search report | | Publication date | Patent family member(s) | | Publication date |
|---|---|---|---|---|---|
| US 2019130255 | A1 | 02-05-2019 | CN | 109754066 A | 14-05-2019 |
| | | | KR | 20190050141 A | 10-05-2019 |
| | | | US | 2019130255 A1 | 02-05-2019 |
| GB 2568083 | A | 08-05-2019 | CN | 110059810 A | 26-07-2019 |
| | | | EP | 3480744 A1 | 08-05-2019 |
| | | | GB | 2568083 A | 08-05-2019 |
| | | | US | 2019228293 A1 | 25-07-2019 |
| US 2019340492 | A1 | 07-11-2019 | EP | 3788557 A1 | 10-03-2021 |
| | | | US | 2019340492 A1 | 07-11-2019 |
| | | | WO | 2019212878 A1 | 07-11-2019 |

EPO FORM P0459

For more details about this annex : see Official Journal of the European Patent Office, No. 12/82

## REFERENCES CITED IN THE DESCRIPTION

**Patent documents cited in the description**

- US 62946169

**Non-patent literature cited in the description**

- The IEEE Standard for Floating Point Arithmetic 754. IEEE, vol. 754